# EUROPEAN PATENT APPLICATION

(11) **EP 4 604 642 A1**
(43) Date of publication of application: **20.08.2025**
(21) Application number: 22964704.5
(22) Date of filing: 07.11.2022
(51) Int. Cl.: H04W 72/12

(54) **WIRELESS COMMUNICATION METHOD, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN)
(74) Representative: Taor, Simon Edward William
(86) International application number: PCT/CN2022/130441
(87) International publication number: WO 2024/098226

(57) **Abstract**

Embodiments of the present disclosure provide a wireless communication method, a device, and a storage medium. The method comprises: a terminal device receives at least one maximum number of transport layers sent by a network device, wherein the at least one maximum number of transport layers is used for determining a first maximum number of transport layers and a second maximum number of transport layers, and/or the at least one maximum number of transport layers is used for determining a third maximum number of transport layers, the first maximum number of transport layers and the second maximum number of transport layers are used for a first PUSCH transmission scheme, the first PUSCH transmission scheme is associated with two different spatial parameters, the third maximum number of transport layers is used for a second PUSCH transmission scheme, and the second PUSCH transmission scheme is associated with one spatial parameter.

## Description

### TECHNICAL FIELD

The embodiments of the present disclosure relate to the technical field of mobile communication, and in particular to a wireless communication method, a device, and a storage medium.

### BACKGROUND

If the terminal device is provided with multiple panels and can simultaneously transmit physical uplink shared channels (PUSCH) on multiple panels. If different signals are simultaneously transmitted using different beams on different panels, the terminal device has different propagation distances relative to different transmission reception points (TRP), and different panels may have different channel conditions, and the PUSCHs transmitted through multiple panels may have different numbers of transmission layers. However, different PUSCHs in the related art have the same number of transmission layers, which is not suitable for PUSCH transmission in a scenario of multiple panels.

### SUMMARY

The embodiment of the present disclosure provides a wireless communication method, a device, and a storage medium.

The wireless communication method according to the embodiment of the present disclosure includes the following operations.

The terminal device receives at least one maximum number of transmission layers transmitted by the network device. The at least one maximum number of transmission layers is configured to determine a first maximum number of transmission layers, a second maximum number of transmission layers, and/or the at least one maximum number of transmission layers is configured to determine a third maximum number of transmission layers. The first maximum number of transmission layers and the second maximum number of transmission layers are used for a first physical uplink shared channel (PUSCH) transmission scheme associated with two different spatial parameters, and the third maximum number of transmission layers is used for a second PUSCH transmission scheme associated with one spatial parameter.

The wireless communication method according to the embodiment of the present disclosure includes the following operations.

The network device transmits at least one maximum number of transmission layers to the terminal device. The at least one maximum number of transmission layers is configured to determine a first maximum number of transmission layers, a second maximum number of transmission layers, and/or the at least one maximum number of transmission layers is configured to determine a third maximum number of transmission layers. The first maximum number of transmission layers and the second maximum number of transmission layers are used for a first physical uplink shared channel (PUSCH) transmission scheme associated with two different spatial parameters, and the third maximum number of transmission layers is used for a second PUSCH transmission scheme associated with one spatial parameter.

The terminal device according to the embodiment of the present disclosure includes a first communication unit.

The first communication unit is configured to receive at least one maximum number of transmission layers transmitted by the network device, the at least one maximum number of transmission layers is configured to determine a first maximum number of transmission layers, a second maximum number of transmission layers, and/or the at least one maximum number of transmission layers is configured to determine a third maximum number of transmission layers. The first maximum number of transmission layers and the second maximum number of transmission layers are used for a first physical uplink shared channel (PUSCH) transmission scheme associated with two different spatial parameters, and the third maximum number of transmission layers is used for a second PUSCH transmission scheme associated with one spatial parameter.

The network device according to the embodiment of the present disclosure includes a second communication unit.

The second communication unit is configured to transmit at least one maximum number of transmission layers to the terminal device. The at least one maximum number of transmission layers is configured to determine a first maximum number of transmission layers, a second maximum number of transmission layers, and/or the at least one maximum number of transmission layers is configured to determine a third maximum number of transmission layers. The first maximum number of transmission layers and the second maximum number of transmission layers are used for a first physical uplink shared channel (PUSCH) transmission scheme associated with two different spatial parameters, and the third maximum number of transmission layers is used for a second PUSCH transmission scheme associated with one spatial parameter.

The communication device according to the embodiment of the present disclosure may be the terminal device or the network device described above, and the communication device includes a processor and a memory. The memory is configured to store a computer program, and the processor is configured to invoke and execute the computer program stored in the memory to perform the wireless communication method described above.

The chip according to the embodiment of the present disclosure is configured for implementing the wireless communication method described above.

Specifically, the chip includes a processor for invoking and executing a computer program from a memory, to enable a device on which the chip is mounted to perform the wireless communication method described above.

The computer-readable storage medium according to the embodiment of the present disclosure is configured to store a computer program that causes a computer to perform the wireless communication method described above.

The computer program product according to the embodiment of the present disclosure includes a computer program instruction that causes a computer to perform the wireless communication method described above.

The computer program according to the embodiment of the present disclosure causes a computer to perform the wireless communication method described above when the computer program is run on the computer.

With the above technical solution, the network device configures at least one maximum number of transmission layers for the terminal device, and the terminal device can respectively determine the maximum number of transmission layers for the first PUSCH transmission scheme and the second PUSCH transmission scheme according to the at least one maximum number of transmission layers configured by the network device, to flexibly set the maximum number of transmission layers corresponding to the PUSCHs in different transmission schemes according to the configuration of the network device, and remove the limit that the pre-coding information is the same and the two transmission layers are the same in the first PUSCH transmission scheme.

### BRIEF DESCRIPTION OF THE DRAWINGS

The accompanying drawings described herein are intended to provide a further understanding of the present disclosure, and constitute a part of the present disclosure, and the schematic embodiments of the present disclosure and the description thereof are intended to explain the present disclosure, and do not constitute an undue limitation to the present disclosure. In the accompanying drawings:
FIG. 1 is a schematic diagram of an application scenario according to an embodiment of the present disclosure;
FIG. 2 is an optional schematic flowchart of a wireless communication method according to an embodiment of the present disclosure;
FIG. 3 is an optional schematic flowchart of a wireless communication method according to an embodiment of the present disclosure;
FIG. 4 is an optional schematic flowchart of a wireless communication method according to an embodiment of the present disclosure;
FIG. 5 is an optional schematic diagram of a first PUSCH transmission scheme according to an embodiment of the present disclosure;
FIG. 6 is an optional schematic diagram of a first PUSCH transmission scheme according to an embodiment of the present disclosure;
FIG. 7 is an optional schematic flowchart of a wireless communication method according to an embodiment of the present disclosure;
FIG. 8 is an optional schematic flowchart of a wireless communication method according to an embodiment of the present disclosure;
FIG. 9A is an optional relationship diagram of a first PUSCH and a second PUSCH according to an embodiment of the present disclosure;
FIG. 9B is an optional relationship diagram of a PUSCH1 and a PUSCH2 according to an embodiment of the present disclosure;
FIG. 10 is an optional schematic structural diagram of a terminal device according to an embodiment of the present disclosure;
FIG. 11 is an optional schematic structural diagram of a terminal device according to an embodiment of the present disclosure;
FIG. 12 is a schematic structural diagram of a communication device according to an embodiment of the present disclosure;
FIG. 13 is a schematic structural diagram of a chip according to an embodiment of the present disclosure; and
FIG. 14 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure, and it is apparent that the described embodiments are a part of the embodiments of the present disclosure, rather than all of the embodiments. Based on the embodiments in the present disclosure, all other embodiments obtained by those skilled in the art without creative work fall within the scope of protection of the present disclosure.

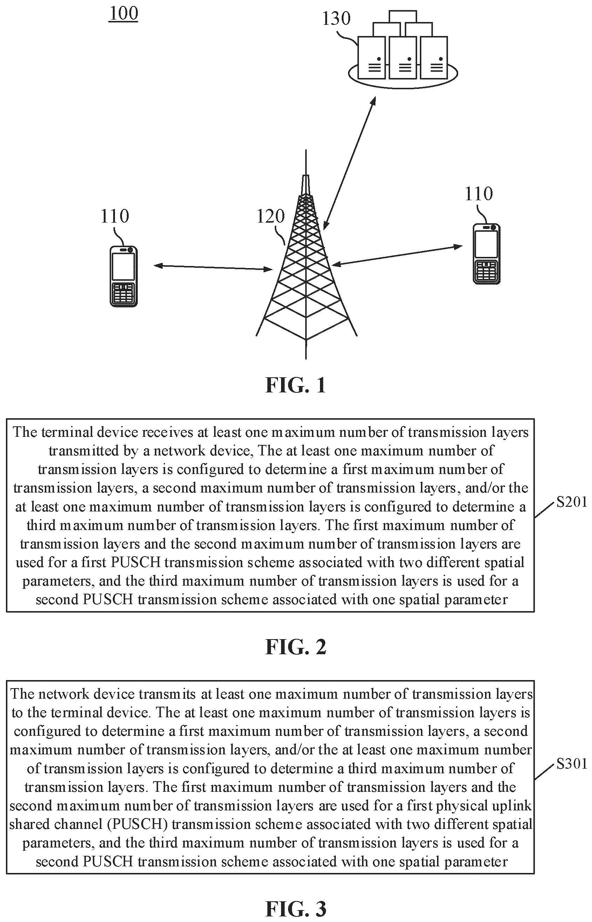

FIG. 1 is a schematic diagram of an application scenario according to an embodiment of the present disclosure.

As shown in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the communication device 100 is illustrated as an example in the embodiments of the present disclosure, but the embodiments of the present disclosure are not limited thereto. That is, the technical solution of the embodiment of the present disclosure can be applied to various communication systems, such as a long term evolution (LTE) system, an LTE time division duplex (TDD), a universal mobile telecommunication system (UMTS), an internet of things (IoT) system, and a narrow band internet of things (NB-IoT) system, an enhanced machine-type communications (eMTC) system, a 5th generation mobile communication technology (5G) communication system (also referred to as new radio (NR) communication system), or a future communication system, etc.

In the communication system 100 illustrated in FIG. 1, the network device 120 may be an access network device that communicates with the terminal device 110. The access network device may provide communication coverage for a particular geographic area and may communicate with the terminal device 110 (e.g., a LTE) within the coverage area.

The network device 120 may be an evolutionary Node B (eNB or eNodeB) or a next generation radio access network (NG RAN) device in the LTE system, or a base station (the next generation Node B, gNB) in the NR system, or a wireless controller in a cloud radio access network (CRAN), or the network device 120 may be a relay station, an access point, an in-vehicle device, a wearable device, a hub, a switch, a bridge, a router, or a network device in a future evolution public land mobile network (PLMN), etc.

The terminal device 110 may be any terminal device including, but not limited to, terminal devices connected to the network device 120 or other terminal devices in a wired or wireless manner.

For example, the terminal device 110 may be an access terminal, a user equipment (UE), a user unit, a user station, a mobile station, a mobile unit, a remote station, a remote terminal, a mobile device, a user terminal, a terminal, a wireless communication device, a user agent or a user device. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device having wireless communication functionality, a computing device or other processing device connected to a wireless modem, an in-vehicle device, a wearable device, a terminal device in a 5G network or a terminal device in a future evolution network, or the like.

The wireless communication system 100 may further include a core network device 130 that communicates with the base station, and the core network device 130 may be a 5G core (5GC) device, for example, an access and mobility management function (AMF), or, an authentication server function (AUSF), or a user plane function (UPF), or a session management function (SMF). Optionally, the core network device 130 may also be an evolved packet core (EPC) device in the LTE network, for example, a session management function and core packet gateway (SMF + PGW-C) device. It should be understood that the SMF and PGW-C can simultaneously implement functions that the SMF and PGW-C. In the process of network evolution, the core network devices may be called as other names, or may be formed as a new network entity by dividing the functions of the core network, which is not limited by the embodiments of the present disclosure.

The respective functional units in the communication system 100 may also establish a connection between each other through a next generation (NG) network interface to achieve communication.

For example, the terminal device establishes an air interface connection with the access network device through the Uu interface for transmitting user plane data and control plane signaling. The terminal device can establish a control plane signaling connection with the AMF through the NG interface 1 (referred to as N1 for short). An access network device, such as a next generation radio access base station (gNB), can establish a user plane data connection with the UPF through an NG interface 3 (referred to as N3 for short). The access network device can establish a control plane signaling connection with the AMF through the NG interface 2 (referred to as N2 for short). The UPF can establish a control plane signaling connection with the SMF through the NG interface 4 (referred to as N4 for short). The UPF can interact user plane data with the data network through the NG interface 6 (referred to as N6 for short). The AMF may establish a control plane signaling connection with the SMF through the NG interface 11 (referred to as N11 for short). The SMF may establish a control plane signaling connection with the PCF through the NG interface 7 (referred to as N7 for short).

FIG. 1 exemplarily illustrates one base station, one core network device, and two terminal devices. Optionally, the wireless communication system 100 may include a plurality of base stations, and another number of terminal devices may be included within the coverage range of each base station, which is not limited by the embodiments of the present disclosure.

It should be noted that FIG. 1 only illustrates a system to which the present disclosure is applied as an example, and of course, the method shown in the embodiment of the present disclosure may also be applied to other systems. Further, the terms "system" and "network" are often used interchangeably herein. Herein, the term "and/or" is only an association relationship describing an association object, and means that there may be three relationships. For example, A and/or B may mean that A alone exists, A and B simultaneously exist, and B alone exists. In addition, the character "/" herein generally indicates that the associated objects before and after are in an "or" relationship. It should also be understood that the "indication" mentioned in the embodiments of the present disclosure may be a direct indication, an indirect indication, or an associated relationship. For example, A indicates B, which may mean that A directly indicates B, for example, B can be acquired by A; which may also mean that A indicates B indirectly, for example A indicates C, and B can be acquired through C; which can also be indicated that there is an association relationship between A and B. It should also be understood that "correspondence" mentioned in the embodiments of the present disclosure may indicate that there is a direct correspondence or indirect correspondence between the two objects, there is an association relationship between the two objects, or the two objections have a relationship between indicating and being indicated, configuring and being configured, or the like. It should also be understood that the "predefined" or "predefined rules" mentioned in the embodiments of the present disclosure may be implemented by storing corresponding codes, tables, or other methods for indicating relevant information in advance in devices (e.g., including terminal devices and network devices), and specific implementations thereof is not limited in the present disclosure. For example, pre-definition may refer to definition in the protocol. It should also be understood that in the embodiment of the present disclosure, the "protocol" may refer to a standard protocol in the communication field, and may include, for example, an LTE protocol, an NR protocol, and related protocols applied in future communication systems, which is not limited in the present disclosure.

In order to facilitate understanding of the technical solutions of the embodiments of the present disclosure, the related technologies of the embodiments of the present disclosure are described below, and the related technologies below can be, as optional solutions, arbitrarily combined with the technical solutions of the embodiments of the present disclosure, and all of them belong to the scope of protection of the embodiments of the present disclosure. A codebook-based PUSCH transmission scheme and a non-codebook-based PUSCH transmission scheme are contained.

The codebook-based PUSCH transmission scheme comprises the following S1, S2 and S3.

At S1, user equipment (LTE) transmits a sounding reference signal (SRS) for a codebook to a network device.

At S2, the network device performs uplink channel detection according to the SRS transmitted by the UE, performs resource scheduling on the UE, and determines SRS resources, the number of layers of the uplink transmission and a pre-coding matrix corresponding to the PUSCH transmission. The network device indicates the above information to the terminal device through downlink control information (DCI).

At S3, the terminal device receives the DCI and transmits the PUSCH according to the instruction of the DCI.

In the codebook-based PUSCH transmission scheme, the network device indicates the SRS resources corresponding to the PUSCH, the number of transmission layers of the PUSCH and the pre-coding matrix of the PUSCH to the UE through DCI. A field carrying the pre-coding matrix and the number of transmission layers in the DCI is a wideband transmitted pre-coding matrix indicator (TPMI) field, and a field indicating the SRS resources in the SRS resource set in the DCI is an SRS resource indicator (SRI) field. The number of transmission layers of the PUSCH and the pre-coding matrix of the PUSCH are indicated by joint coding.

For the codebook-based transmission scheme, the terminal device determines the number of bits in the TPMI domain according to the configured maximum number of transmission layers (which may also be called the maximum rank (maxRank)), that is, the configured value of the high-layer parameter maxRank.

The non-codebook-based PUSCH transmission scheme includes the following S1, S2 and S3.

At S 1, the UE measures a downlink reference signal, obtains a candidate pre-coding matrix, and pre-codes the SRS by using the candidate pre-coding matrix, and transmits the non-codebook SRS to the network device.

At S2, the network device performs uplink channel detection according to the SRS transmitted by the UE, performs resource scheduling on the UE, and determines the SRS resources corresponding to the beam transmitted by the PUSCH. The network device indicates the above information to the terminal device through DCI.

At S3, the terminal device receives the DCI and transmits the PUSCH according to the instruction of the DCI.

In the non-codebook-based PUSCH transmission scheme, the network device indicates the number of transmission layers of PUSCH and the SRS resources in the SRS resource set to the terminal device through the SRI field in the DCI. For the non-codebook-based transmission, the terminal device determines the number of bits of the SRI according to the configured maximum number of transmission layers, that is, the configured high-layer parameter maxMIMO-Layers.

The multi-TRP PUSCH transmission scheme is described as follows.

Incoherent downlink and uplink transmission based on multiple TRPs is introduced in the NR system. The backhaul between the TRPs may be ideal or non-ideal. Under the ideal backhaul, the TRPs can exchange information quickly and dynamically, while under the non-ideal backhaul, the TRPs can only exchange information quasi-statically due to the large delay.

In the downlink incoherent transmission, the multiple TRPs may independently schedule multiple PDSCH transmissions of a terminal by using different control channels, or may schedule transmissions of different TRPs by using the same control channel. The data of different TRPs use different transmission layers, and the above case that the transmission of different TRPs are scheduled by using the same control channel may only be used in the ideal backhaul situation.

The UE may transmit the PUSCHs to the two TRPs in a time division multiplexing (TDM) manner. The terminal device performs analog beamforming on the PUSCHs transmitted on different TRPs aiming at the TRPs, to distinguish the different PUSCHs through the spatial domain and provide uplink spectrum efficiency.

The network device may schedule the terminal device by one piece of DCI to transmit the PUSCHs to two TRPs. The PUSCHs transmitted to the two TRPs may be configured with independent transmission parameters, such as beams and pre-coding matrices, but the numbers of transmission layers of the PUSCHs transmitted to the two TRPs are limited to be the same.

For the codebook-based PUSCH transmission, the one piece of DCI may include two TPMI fields, the first TPMI field indicates pre-coding information and the number of transmission layers of the PUSCH transmitted to TRP1, the number of transmission layers of the PUSCH transmitted to TRP2 is the same as the number of transmission layers indicated by the first TPMI field, the first SRI field indicates the beam direction of the PUSCH transmitted to TRP1, and the second SRI field indicates the beam direction of the PUSCH transmitted to TRP2. The network device is configured with two SRS resource sets, the first SRI domain and the second SRI domain respectively correspond to the two SRS resource sets, and the first SRI domain and the second SRI domain indicate beam directions of the PUSCHs transmitted to the two TRPs. It can be understood that the second TPMI domain only needs to indicate pre-coding information, and the number of transmission layers is the same as the number of transmission layers indicated by the first TPMI domain by default. The pre-coding information may be understood as a pre-coding matrix.

For non-codebook-based PUSCH transmission, the single DCI includes two SRI fields, the first SRI field indicates the beam direction and the number of transmission layers of the PUSCH transmitted to TRP1, and the second SRI field indicates the beam direction of the PUSCH transmitted to TRP2, and the number of transmission layers of the PUSCH transmitted to TRP2 is the same as the number of transmission layers indicated by the first SRI.

The network device may also schedule the terminal device through multiple pieces of DCIs to transmit the PUSCHs to the two TRPs, and the multiple pieces of DCI may be carried through different control resource sets (CORESETs). Multiple CORESET groups are configured on the network side, and each TRP is scheduled by the CORESET in the respective one CORESET group thereof, that is, different TRPs can be distinguished by the CORESET groups. For example, the network device may configure a CORESET group index for each CORESET, and different indexes correspond to different TRPs.

Based on the above description, the network device may schedule PUSCHs transmitted to two TRPs by one piece of DCI, and add the TPMI fields into the DCI, that is, the DCI includes two TPMI fields. The first TPMI field indicates the pre-coding matrix and the number of transmission layers of the PUSCH transmitted to one TRP, and the numbers of transmission layers of the PUSCHs transmitted to the two TRPs are limited to be the same. The second TPMI field only indicates the pre-coding matrix of the PUSCH transmitted to the other TRP.

If the terminal device is configured with multiple panels and can simultaneously transmit PUSCHs on multiple panels, and different signals are simultaneously transmitted on different panels using different beams, the terminal device has different propagation distances relative to different receiving TRPs, and the channel conditions of different panels may be different, and the PUSCHs transmitted through multiple panels may have different numbers of transmission layers.

However, how to configure the maximum number of transmission layers for two panels, and how to determine the number of bits in the TPMI and SRI are not supported in the prior art. Moreover, the simultaneous transmission scheme of multiple panels may also be switched to be or from the single-panel or single-TRP transmission scheme. In this case, the maximum number of transmission layers supported by the single-panel or single-TRP transmission scheme is also different for the simultaneous multi-panel transmission scheme. How to determine the maximum number of transmission layers has not disclosed yet when the switch occurs.

In order to facilitate understanding of the technical solutions of the embodiments of the present disclosure, the technical solutions of the present disclosure will be described in detail below with reference to specific examples. The above related technologies may be, as an optional solution, arbitrarily combined with the technical solutions of the embodiments of the present disclosure, and all of them belong to the scope of protection of the embodiments of the present disclosure. The embodiments of the present disclosure include at least some of the following.

The wireless communication method according to the embodiment of the present disclosure is applied to a terminal device, and as shown in FIG. 2, the wireless communication method includes the following operation S201.

At S201, the terminal device receives at least one maximum number of transmission layers transmitted by the network device. The at least one maximum number of transmission layers is configured to determine a first maximum number of transmission layers, a second maximum number of transmission layers, and/or the at least one maximum number of transmission layers is configured to determine a third maximum number of transmission layers. The first maximum number of transmission layers and the second maximum number of transmission layers are used for a first PUSCH transmission scheme associated with two different spatial parameters, and the third maximum number of transmission layers is used for a second PUSCH transmission scheme associated with one spatial parameter.

The wireless communication method according to the embodiment of the present disclosure is applied to a network device, and as shown in FIG. 3, the wireless communication method includes the following operation S301.

At S301, the network device transmits at least one maximum number of transmission layers to the terminal device. The at least one maximum number of transmission layers is configured to determine a first maximum number of transmission layers, a second maximum number of transmission layers, and/or the at least one maximum number of transmission layers is configured determine a third maximum number of transmission layers. The first maximum number of transmission layers and the second maximum number of transmission layers are used for a first PUSCH transmission scheme associated with two different spatial parameters, and the third maximum number of transmission layers is used for a second PUSCH transmission scheme associated with one spatial parameter.

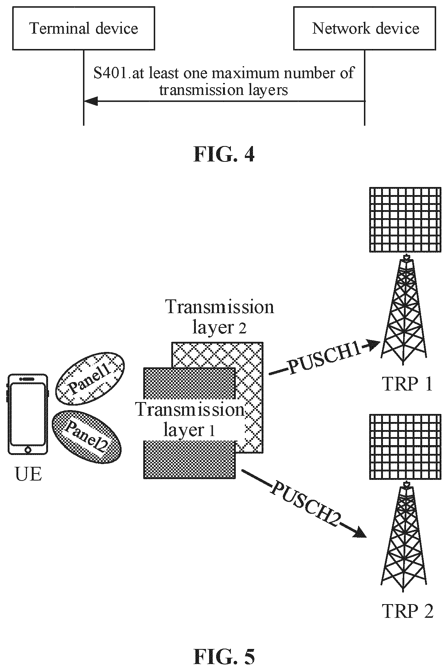

The wireless communication method according to the embodiment of the present disclosure is applied to a communication system including a terminal device and a network device, and as shown in FIG. 4, the wireless communication method includes the following operation S401.

At S401, the network device transmits at least one maximum number of transmission layers to the terminal device.

The at least one maximum number of transmission layers is configured to determine a first maximum number of transmission layers, a second maximum number of transmission layers, and/or the at least one maximum number of transmission layers is configured determine a third maximum number of transmission layers. The first maximum number of transmission layers and the second maximum number of transmission layers are used for a first PUSCH transmission scheme associated with two different spatial parameters, and the third maximum number of transmission layers is used for a second PUSCH transmission scheme associated with one spatial parameter.

Next, the wireless communication method illustrated in FIG. 2, FIG. 3, or FIG. 4 is described.

The network device transmits at least one maximum number of transmission layers to the terminal device, the at least one maximum number of transmission layers includes at least one of: the first maximum number of transmission layers, the second maximum number of transmission layers and the third maximum number of transmission layers.

The terminal device receives the at least one maximum number of transmission layers transmitted by the network device, and determines the first maximum number of transmission layers and the second maximum number of transmission layers associated with the first PUSCH transmission scheme, and/or determines the third maximum number of transmission layers associated with the second PUSCH transmission scheme based on the at least one maximum number of transmission layers transmitted by the network device.

In an example, the terminal device determines the first maximum number of transmission layers and the second maximum number of transmission layers based on at least one maximum number of transmission layers transmitted by the network device. In an example, the terminal device determines the third maximum number of transmission layers based on at least one maximum number of transmission layers transmitted by the network device. In an example, the terminal device determines the first maximum number of transmission layers, the second maximum number of transmission layers and the third maximum number of transmission layers based on at least one maximum number of transmission layers transmitted by the network device.

The first PUSCH transmission scheme is associated with two different spatial parameters including a first spatial parameter and a second spatial parameter, and the second PUSCH transmission scheme is associated with a third spatial parameter. It can be understood that the first PUSCH transmission scheme may be understood as a simultaneous multi-panel PUSCH transmission scheme, and the second PUSCH scheme may be a single-panel or single-TRP PUSCH transmission scheme.

In some embodiments, the third spatial parameter is different from each of the first spatial parameter and the second spatial parameter. In some embodiments, the third spatial parameter is the same as the first spatial parameter or the second spatial parameter.

In the embodiment of the present disclosure, the third spatial parameter is used for single PUSCH transmission of a single PUSCH, and the first spatial parameter and the second spatial parameter are used for simultaneous transmission of the first PUSCH and the second PUSCH. If the third spatial parameter is the same as the first spatial parameter or the second spatial parameter, when the terminal device switches between the transmission of a single PUSCH and simultaneous transmission of the multiple PUSCHs, not all the spatial parameters are necessarily switched, and only one set of spatial parameters is switched, and the other set of spatial parameters may be maintained, thereby reducing the delay of switching the transmission scheme by the terminal device and improving the resource utilization.

The first PUSCH transmission scheme is used for the transmission of the first PUSCH and the second PUSCH, the first spatial parameter is used for the first PUSCH, and the second spatial parameter is used for the second PUSCH.

It is understood that the first PUSCH and the second PUSCH may be scheduled by the same piece of DCI or may be scheduled by different pieces of DCIs.

The second PUSCH transmission scheme is used for the transmission of the third PUSCH, and the third spatial parameter is used for the transmission of the third PUSCH. The third PUSCH may be multiple PUSCHs that are repeatedly transmitted in the time domain. It can be understood that one panel of the UE transmits one PUSCH or multiple repeated PUSCH to one TRP. As another case of the second PUSCH transmission scheme, multiple panels of the UE transmit one PUSCH or multiple repeated PUSCHs to one TRP.

In some embodiments, the first PUSCH transmission scheme is used for the transmission of a first PUSCH and a second PUSCH, the first PUSCH and the second PUSCH overlap in the time domain, and the second PUSCH transmission scheme is used for transmission of a third PUSCH.

The first maximum number of transmission layers and the second maximum number of transmission layers are used respectively for the first PUSCH and the second PUSCH that overlap in time, and the first PUSCH and the second PUSCH may be transmitted by different antenna panels and received by different TRPs on the network device side. It is understood that the first panel transmits the first PUSCH to the first TRP, and the second panel transmits the second PUSCH to the second TRP.

The first PUSCH and the second PUSCH may completely or partially overlap in time.

The first maximum number of transmission layers is used to limit the number of transmission layers used for transmission of the first PUSCH, the second maximum number of transmission layers is used to limit the number of transmission layers used for transmission of the second PUSCH, and the third maximum number of transmission layers is used to limit the number of transmission layers used for transmission of the third PUSCH.

In some embodiments, the first maximum number of transmission layers is a maximum number of transmission layers used for the transmission of the first PUSCH, the second maximum number of transmission layers is a maximum number of transmission layers used for the transmission of the second PUSCH, and the third maximum number of transmission layers is a maximum number of the transmission layers used for transmission of the third PUSCH.

In the embodiment of the present disclosure, the maximum number of transmission layers (maxMIMO-Layers) may be replaced with the maximum rank (maxRank).

In the embodiment of the present disclosure, the first maximum number of transmission layers, the second maximum number of transmission layers and the third maximum number of transmission layers may be transmitted together or separately. When the first maximum number of transmission layers, the second maximum number of transmission layers and the third maximum number of transmission layers are separately transmitted, the third maximum number of transmission layers, the first maximum number of transmission layers and the second maximum number of transmission layers may be carried in different first parameters, and in this case, the first maximum number of transmission layers and the second maximum number of transmission layers may be carried in the same first parameter or may be carried in different first parameters.

In the wireless communication method according to the embodiment of the present disclosure, the network device configures at least one maximum number of transmission layers for the terminal device, and the terminal device can respectively determine the maximum number of transmission layers for the first PUSCH transmission scheme and the second PUSCH transmission scheme according to the at least one maximum number of transmission layers configured by the network device, so that the maximum number of transmission layers corresponding to the PUSCH in different transmission schemes can be flexibly set according to the configuration of the network device, and the limit that the two transmission layers used in the first PUSCH transmission scheme must be the same is removed.

In some embodiments, the first maximum number of transmission layers and the second maximum number of transmission layers are used for the first PUSCH transmission scheme, the first PUSCH transmission scheme is associated with two sets of spatial parameters, and the third maximum number of transmission layers is used for the second PUSCH transmission scheme, and the second PUSCH transmission scheme is associated with one set of transmission parameters.

In the first PUSCH transmission scheme, the terminal device transmits the PUSCHs using two sets of spatial parameters, the first spatial parameter is used for the transmission of the first PUSCH and the second spatial parameter is used for the transmission of the second PUSCH. It is understood that in the first PUSCH transmission scheme, the terminal device performs simultaneous transmission of two PUSCHs based on two panels, that is, the first PUSCH and the second PUSCH are transmitted through different panels, and the first PUSCH and the second PUSCH overlap in the time domain.

In some embodiments, in the first PUSCH transmission scheme, the transmission mode of the two PUSCHs transmitted simultaneously includes one of space division multiple address (SDM), TDM, and single frequency network (SFN). In this case, the two PUSCHs simultaneously transmitted are scheduled by the same DCI.

In some embodiments, in the first PUSCH transmission scheme, two PUSCHs transmitted simultaneously are scheduled by respective DCIs. Alternatively, one of the two simultaneously transmitted PUSCHs is scheduled by the DCI and the other is scheduling-free. Alternatively, both PUSCHs transmitted simultaneously are scheduling-free.

In an example, when the transmission mode of the two PUSCHs transmitted simultaneously is the SDM, the two PUSCHs transmitted simultaneously respectively carry different transmission layers of one PUSCH and are transmitted to one or more TRPs through different panels of the UE. The two PUSCHs transmitted simultaneously have the same time domain resources and frequency domain resources. As illustrated in FIG. 5, the transmission layer of the PUSCH transmitted by the panel 1 is associated with a first transmission configuration indicator (TCI) state, and the transmitted PUSCH is referred to as the first PUSCH. Another transmission layer of the PUSCH transmitted by the second panel is associated with a second TCI state, and the transmitted PUSCH is referred to as the second PUSCH.

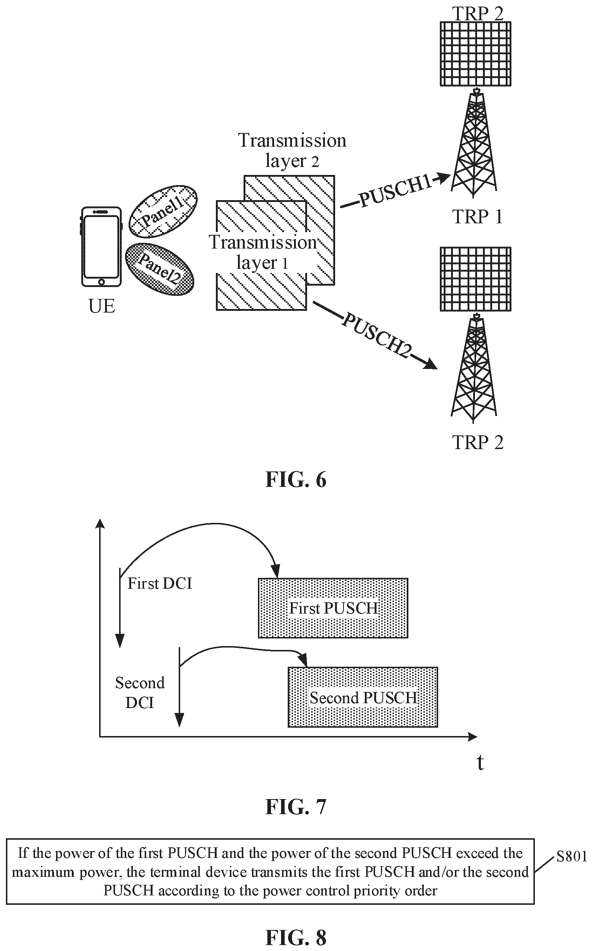

In an example, when the transmission mode of two PUSCHs transmitted simultaneously is the SFN, repeated transmission of one PUSCH is transmitted to one or more TRPs through different panels. The first PUSCH and the second PUSCH have the same frequency domain resource, the same time domain resource and the same DMRS port. As shown in FIG. 6, the PUSCH1 of the panels and the PUSCHs of the panels share the same transmission layer for transmission.

In some embodiments, the spatial parameter includes at least one of: a transmission configuration indicator (TCI) state; antenna panel information; control resource set (CORESET) group information; SRS resource set information; and beam information.

The antenna panel information indicates a panel of the terminal device.

The CORESET group information indicates the CORESET group. It is understood that different CORESET groups are associated with different TRPs to distinguish different TRPs by different CORESET groups. In some embodiments, the CORESET group information may include a CORESET group index.

The SRS resource set information indicates the SRS resource set. It can be understood that different SRS resource sets are associated with different TRPs, that is, different TRPs transmit different PUSCHs through SRS resources in different SRS resource sets.

In the embodiment of the present disclosure, at least one maximum number of transmission layers transmitted by the network device may include at least one of the following scenarios based on the included maximum number of transmission layers.

At the first scenario, the at least one maximum number of transmission layers includes the first maximum number of transmission layers, the second maximum number of transmission layers and the third maximum number of transmission layers.

At the second scenario, the at least one maximum number of transmission layers includes the first maximum number of transmission layers and the third maximum number of transmission layers.

At the third scenario, the at least one maximum number of transmission layers includes the first maximum number of transmission layers and the second maximum number of transmission layers.

At the fourth scenario, the at least one maximum number of transmission layers includes the third maximum number of transmission layers.

In the first scenario, the network device transmits the first maximum number of transmission layers, the second maximum number of transmission layers and the third maximum number of transmission layers to the terminal device, and the terminal device receives the first maximum number of transmission layers, the second maximum number of transmission layers and the third maximum number of transmission layers.

The first maximum number of transmission layers is associated with a first spatial parameter, the second maximum number of transmission layers is associated with a second spatial parameter, and the third maximum number of transmission layers is a maximum number of transmission layers in single-panel transmission or single-TRP transmission.

In some embodiments, the first maximum number of transmission layers, the second maximum number of transmission layers and the third maximum number of transmission layers meet at least one of the following conditions.

A sum of the first maximum number of transmission layers and the second maximum number of transmission layers is the same as the third maximum number of transmission layers.

The sum of the first maximum number of transmission layers and the second maximum number of transmission layers is independent of the third maximum number of transmission layers.

Every two of the first maximum number of transmission layers, the second maximum number of transmission layers and the third maximum number of transmission layers are different.

If the sum of the first maximum number of transmission layers and the second maximum number of transmission layers is independent of the third maximum number of transmission layers, the sum of the first maximum number of transmission layers and the second maximum number of transmission layers may be greater than, equal to or less than the third maximum number of transmission layers.

In some embodiments, the first maximum number of transmission layers is associated with the first spatial parameter of the two different spatial parameters.

The second maximum number of transmission layers is associated with the second spatial parameter of the two different spatial parameters.

The third maximum number of transmission layers is associated with the first spatial parameter and the second spatial parameter, or is associated with the third spatial parameter.

After the terminal device receives the first maximum number of transmission layers, the second maximum number of transmission layers and the third maximum number of transmission layers, the first maximum number of transmission layers is associated with the first spatial parameter, the second maximum number of transmission layers is associated with the second spatial parameter, the third maximum number of transmission layers is associated with the third spatial parameter, and the terminal device determines the maximum number of transmission layers corresponding to a PUSCH based on the association relationship between the spatial parameter and the maximum number of transmission layers and the spatial parameter used by the PUSCH.

In the second scenario, the network device configures a maximum number of transmission layers (i.e. the first maximum number of transmission layers) corresponding to the first PUSCH transmission scheme to the terminal device, and configures a third maximum number of transmission layers corresponding to the second PUSCH transmission scheme. In this case, the terminal device receives the first maximum number of transmission layers and the third maximum number of transmission layers, and determines the second maximum number of transmission layers.

In some embodiments, the value of the second maximum number of transmission layers is one of a first default value, a difference between the first maximum number of transmission layers and the third maximum number of transmission layers, the same value as the third maximum number of transmission layers, the same value as the first maximum number of transmission layers, and a value obtained by subtracting the first maximum number of transmission layers from a second default value.

The first default value is a positive integer, or the first default value is a positive integer and is a multiple of 2, such as 2, 4, etc.

The second default value may be a positive integer, or is a positive integer such as 4, 6, or 8.

In some embodiments, if the first PUSCH transmission scheme is associated with the first spatial parameter and the second spatial parameter, the second PUSCH transmission scheme is associated with the third spatial parameter, the first spatial parameter is associated with the first maximum number of transmission layers, and the second spatial parameter is the same as the third spatial parameter, the value of the second maximum number of transmission layers is the same as the value of the third maximum number of transmission layers.

A spatial parameter of the maximum transmission parameter which has no association in the first PUSCH transmission scheme is a second spatial parameter, and when the second spatial parameter is the same as the third spatial parameter associated with the second PUSCH transmission scheme, the value of the second maximum number of transmission layers is the same as the value of the third maximum number of transmission layers.

In the third scenario, the network device configures two maximum transmission layers (i.e. the first maximum number of transmission layers and the second maximum number of transmission layers) corresponding to the first PUSCH transmission scheme to the terminal device, and in this case, the terminal device receives the first maximum number of transmission layers and the second maximum number of transmission layers, and determines the third maximum number of transmission layers.

In some embodiments, the value of the third maximum number of transmission layers is one of a third default value, a sum of the first maximum number of transmission layers and the second maximum number of transmission layers, the same as the first maximum number of transmission layers, and the same as the second maximum number of transmission layers.

The third default value is a positive integer, or the third default value is a positive integer and is a multiple of 2, such as 2, 4, etc.

In the fourth scenario, the network device configures the third maximum number of transmission layers corresponding to the second PUSCH transmission scheme to the terminal device, and in this case, the terminal device receives the third maximum number of transmission layers, and determines the first maximum number of transmission layers and the second maximum number of transmission layers.

In some embodiments, the first maximum number of transmission layers is a fourth default value or the same value as the third maximum number of transmission layers.

In some embodiments, the second maximum number of transmission layers is a fifth default value or the same value as the third maximum number of transmission layers.

In the embodiment of the present disclosure, one or both of the first maximum number of transmission layers and the second maximum number of transmission layers may have the same value as the third maximum number of transmission layers.

In the third scenario or the fourth scenario, if the third spatial parameter is the same as the first spatial parameter or the second spatial parameter, the value of the third maximum number of transmission layers is the same as the value of the first maximum number of transmission layers or the second maximum number of transmission layers.

In the third scenario, if the third spatial parameter is the same as the first spatial parameter or the second spatial parameter, the terminal device determines the third maximum number of transmission layers according to the first maximum number of transmission layers or the second maximum number of transmission layers.

In the fourth scenario, if the third spatial parameter is the same as the first spatial parameter or the second spatial parameter, the terminal device determines the first maximum number of transmission layers or the second maximum number of transmission layers according to the third maximum number of transmission layers.

In some embodiments, at least one of the first maximum number of transmission layers, the second maximum number of transmission layers and the third maximum number of transmission layers is a multiple of 2.

In the embodiment of the present disclosure, the first maximum number of transmission layers, the second maximum number of transmission layers and the third maximum number of transmission layers are all positive integers.

In an example, the first maximum number of transmission layers is 2, the second maximum number of transmission layers is 2, and the third maximum number of transmission layers is 4. In an example, the first maximum number of transmission layers is 1, the second maximum number of transmission layers is 1, and the third maximum number of transmission layers is 4. In an example, the first maximum number of transmission layers is 1, the second maximum number of transmission layers is 2, and the third maximum number of transmission layers is 4. In an example, the first maximum number of transmission layers is 4, the second maximum number of transmission layers is 2, and the third maximum number of transmission layers is 4.

In the embodiment of the present disclosure, at least one of the first maximum number of transmission layers, the second maximum number of transmission layers and the third maximum number of transmission layers is a multiple of 2, and can be matched with the configuration of the dual-polarized antenna, thereby improving applicability of the maximum number of transmission layers.

In some embodiments, the operation that the terminal device receives at least one maximum number of transmission layers transmitted by the network device includes the following operation.

The terminal device receives a first parameter transmitted by the network device, and the first parameter includes the at least one maximum number of transmission layers.

In this case, the operation that the network device transmits the at least one maximum number of transmission layers to the terminal device includes the following operation.

The network device transmits the first parameter to the terminal device, and the first parameter includes the at least one maximum number of transmission layers.

The network device may transmit one or more first parameters including the at least one maximum number of transmission layers. The first parameter may be a high-layer parameter.

In some embodiments, if the at least one maximum number of transmission layers includes the first maximum number of transmission layers and/or the second maximum number of transmission layers, the first parameter includes at least one of a SRS resource set configuration parameter; a PUSCH configuration parameter (PUSCH-Config); and a PUSCH serving cell configuration parameter.

The SRS resource set configuration parameter may be indicated as SRS-ResourceSet.

The PUSCH configuration parameter may be indicated as PUSCH-Config, and the PUSCH serving cell configuration parameter may be indicated as PUSCH-ServingCellConfig.

The first maximum number of transmission layers and the second maximum number of transmission layers are configured in the high-layer parameter SRS-ResourceSet, PUSCH-Config, and PUSCH-ServingCellConfig.

In some embodiments, the at least one maximum number of transmission layers includes the first maximum number of transmission layers and/or the second maximum number of transmission layers, and the third maximum number of transmission layers is a sum of the first maximum number of transmission layers and the second maximum number of transmission layers, the first parameter includes at least one of a PUSCH configuration parameter and a PUSCH serving cell configuration parameter.

In the embodiment of the present disclosure, the third maximum number of transmission layers is the sum of the first maximum number of transmission layers and the second maximum number of transmission layers, and the third maximum number of transmission layers corresponding to the second PUSCH transmission scheme is determined by reading the first maximum number of transmission layers and the second maximum number of transmission layers of the first PUSCH transmission scheme. If the first maximum number of transmission layers and the second maximum number of transmission layers are configured in high-layer parameters PUSCH-Config and PUSCH-ServingCellConfig, the terminal device is avoided from obtaining the SRS resource set configuration parameters involving specific spatial parameters when the terminal device determines the third maximum number of transmission layers.

In some embodiments, the at least one maximum number of transmission layers includes the first maximum number of transmission layers and/or the second maximum number of transmission layers, and the third maximum number of transmission layers is a sum of the first maximum number of transmission layers and the second maximum number of transmission layers, and the first parameter includes at least one of a PUSCH configuration parameter and a PUSCH serving cell configuration parameter.

The third maximum number of transmission layers is configured in the high-layer parameters PUSCH-Config and PUSCH-ServingCellConfig.

In some embodiments, the first maximum number of transmission layers is used to determine first information, the first information is transmission information associated with a first transmission parameter, and the first transmission parameter is a transmission parameter for indicating transmission of the first PUSCH in the first PUSCH transmission scheme.

The second maximum number of transmission layers is used to determine second information, the second information is transmission information associated with a second transmission parameter, and the second transmission parameter is a transmission parameter for indicating transmission of the second PUSCH in the first PUSCH transmission scheme, and the first PUSCH and the second PUSCH overlap in a time domain.

The third maximum number of transmission layers is used to determine third information, the third information is transmission information associated with a third transmission parameter, and the third transmission parameter is a transmission parameter for indicating transmission of the third PUSCH in the second PUSCH transmission scheme.

In the embodiment of the present disclosure, the first maximum number of transmission layers is used to determine the first information, the second maximum number of transmission layers is used to determine the second information, and the third maximum number of transmission layers is used to determine the third information. Since the first maximum number of transmission layers and the second maximum number of transmission layers are used for a transmission scheme, and the third maximum number of transmission layers is used for another transmission scheme, the terminal device may respectively determine the first information and the second information respectively based on the first maximum number of transmission layers and the second maximum number of transmission layers, or the terminal device may determine the third information based on the third maximum number of transmission layers.

The first information, the second information and the third information are transmission information associated with transmission parameters of different channels.

In some embodiments, the transmission information includes at least one of the number of bits of an information field for carrying a corresponding transmission parameter, and a set of ranges to which the corresponding transmission parameter belongs.

The set of ranges to which the transmission parameter belongs can be understood as that the transmission parameter corresponds to different tables, and the range of the transmission parameter is different in different tables.

In some embodiments, the transmission parameter includes at least one of a TPMI, a SRI, indicators associated with a phase-tracking reference signals (PTRS) and a demodulation reference signal (DMRS).

The maximum number of transmission layers corresponds to the PUSCH is used to determine the number of bits of an information field carrying the transmission parameters of the PUSCH.

In an example, the number of one or more bits in the information field which carries the following first transmission parameters of the first PUSCH is determined based on the first maximum number of transmission layers: indications associated with a first TPMI, a first SRI, a first PTRS and a first DMRS. In an example, the number of one or more bits in the information field which carries the following second transmission parameters of the second PUSCH is determined based on the second maximum number of transmission layers: indications associated with a second TPMI, a second SRI, a second PTRS and a second DMRS. In an example, the number of one or more bits in the information field which carries the following third transmission parameters of the third PUSCH is determined based on the third maximum number of transmission layers: indications associated with a third TPMI, a third SRI, a third PTRS and a third DMRS.

In some embodiments, the transmission parameter further includes an SRS resource set. The third SRS resource set in the third transmission parameter is different from each of the first SRS resource set in the first transmission parameter and the second SRS resource set in the second transmission parameter.

In the embodiment of the present disclosure, the transmission mode of the PUSCH in the first PUSCH, the second PUSCH and the third PUSCH may be codebook-based transmission or non-codebook-based transmission, the first PUSCH and the second PUSCH have the same transmission mode.

If the transmission of the PUSCH is the codebook-based transmission, the transmission parameter includes at least one of indications associated with a TPMI, a PTRS and a DMRS.

The TPMI indicates pre-coding information and the number of transmission layers of the PUSCH, and the number of transmission layers indicated by the TPMI is less than the maximum number of transmission layers.

If the transmission of the first PUSCH is the codebook-based transmission, the first TPMI indicates pre-coding information and the number of transmission layers of the first PUSCH, and the number of transmission layers indicated by the first TPMI is less than or equal to the first maximum number of transmission layers.

If the transmission of the second PUSCH is a codebook-based transmission, the second TPMI indicates pre-coding information and the number of transmission layers of the second PUSCH, and the number of transmission layers indicated by the second TPMI is less than or equal to the second maximum number of transmission layers.

If the transmission of the third PUSCH is a codebook-based transmission, the third TPMI indicates pre-coding information and the number of transmission layers of the third PUSCH, and the number of transmission layers indicated by the third TPMI is less than or equal to the third maximum number of transmission layers.

In some embodiments, the maximum number of ports in SRS resources in the third SRS resource set for a codebook-based PUSCH transmission is less than or equal to a sum of the first maximum number of transmission layers and the second maximum number of transmission layers.

When the third transmission parameter includes the third SRI, the SRS resources indicated by the third SRI belong to the third SRS resource set.

If the transmission of the PUSCH is a non-codebook-based transmission, the transmission parameter includes at least one of indications associated with a SRI, a PTRS and a DMRS.

The SRI indicates pre-coding information and the number of transmission layers of the PUSCH, and the number of transmission layers indicated by the SRI is less than or equal to the maximum number of transmission layers.

If the transmission of the first PUSCH is a non-codebook-based transmission, the first SRI indicates pre-coding information and the number of transmission layers of the first PUSCH, and the number of transmission layers indicated by the first TPMI is less than or equal to the first maximum number of transmission layers.

If the transmission of the second PUSCH is a non-codebook-based transmission, the second SRI indicates pre-coding information and the number of transmission layers of the second PUSCH, and the number of transmission layers indicated by the second TPMI is less than or equal to the second maximum number of transmission layers.

If the transmission of the third PUSCH is a non-codebook-based transmission, the third SRI indicates pre-coding information and the number of transmission layers of the third PUSCH, and the number of transmission layers indicated by the third TPMI is less than or equal to the third maximum number of transmission layers.

When the transmission of the PUSCH is the non-codebook-based PUSCH transmission, the number of SRS resources indicated by the SRS is less than or equal to the sum of the first maximum number of transmission layers and the second maximum number of transmission layers.

In some embodiments, the terminal device further performs the following operations. If the PUSCH transmission scheme is the first PUSCH transmission scheme, the terminal device determines the first information according to the first maximum number of transmission layers and determines the second information according to the second maximum number of transmission layers.

In some embodiments, the terminal device further performs the following operations. If the PUSCH transmission scheme is the second PUSCH transmission scheme, the terminal device determines the third information according to the third maximum number of transmission layers.

In some embodiments, the terminal device further performs the following operations. The terminal device receives a first signaling transmitted by the network device, and the first signaling indicates a type of the PUSCH transmission scheme.

In this case, the network device further performs the following operations. The network device transmits a first signaling to the terminal device, and the first signaling indicates a type of the PUSCH transmission scheme.

The type of the PUSCH transmission scheme is indicated based on the first signaling transmitted by the network device.

In some embodiments, the first signaling includes at least one of downlink control information (DCI), a radio resource control (RRC) signaling, and a media access control (MAC) signaling.

In some embodiments, if the first signaling is a DCI, an SRS resource set indication field carried in the DCI indicates a type of the PUSCH transmission scheme.

When the first signaling is the DCI, the terminal device determines the type of the PUSCH transmission scheme based on the SRS resource set indication field carried in the first DCI.

In some embodiments, if a value of the SRS resource set indication field is a first value, the first value indicates two SRS resource sets, and the PUSCH transmission scheme is a first PUSCH transmission scheme, and/or, if the value of the SRS resource set indication field is a second value, the second value indicates one SRS resource set, and the PUSCH transmission scheme is a second PUSCH transmission scheme.

The first value may include a value indicating two SRS resource sets such as 10, 11, etc., and when the SRS resource set indication field indicates two SRS resource sets, it is determined that two SRS resource sets are required in the PUSCH transmission scheme, and the current PUSCH transmission scheme is the first PUSCH transmission scheme.

It is understood that the first value may also indicate a usage order of the two SRS resource sets.

The second value may include a value indicating one SRS resource set such as 00, 01, etc., and when the SRS resource set indication field indicates one SRS resource set, it is determined that one SRS resource set is required in the PUSCH transmission scheme, and the current PUSCH transmission scheme is the second PUSCH transmission scheme.

In some embodiments, if the value of the SRS resource set indication field is a first value, the value of the third maximum number of transmission layers is a sum of the first maximum number of transmission layers and the second maximum number of transmission layers.

If the value of the SRS resource set indication field is a second value, and the second value indicates a first SRS resource set and a second SRS resource set, the PUSCH transmission scheme is another case of the second PUSCH transmission scheme, and the first transmission parameter and the second transmission parameter are simultaneously used for the transmission of the PUSCH.

In some embodiments, if the second value indicates a first SRS resource set associated with the first maximum number of transmission layers, the value of the third maximum number of transmission layers is the same as the value of the first maximum number of transmission layers, and/or, if the second value indicates a second SRS resource set associated with the second maximum number of transmission layers, a value of the third maximum number of transmission layers is the same as a value of the second maximum number of transmission layers.

In an example, the second value may include a value indicating one SRS resource set such as 00, 01, the second value 00 indicates a first SRS resource set, and the first SRS resource set is associated with a first maximum number of transmission layers, the second value 01 indicates a second SRS resource set, and the second SRS resource set is associated with a second maximum number of transmission layers.

When the second value indicates the first SRS resource set, the third PUSCH transmitted by the second PUSCH transmission scheme is associated with the first SRS resource set, and in this case, the SRS resource set of the first PUSCH is the same as the SRS resource set of the third PUSCH, and the maximum number of transmission layers of the first PUSCH is the same as the maximum number of transmission layers of the third PUSCH.

When the second value indicates the second SRS resource set, the third PUSCH transmitted by the second PUSCH transmission scheme is associated with the second SRS resource set, and in this case, the SRS resource set of the second PUSCH is the same as the SRS resource set of the third PUSCH, and the maximum number of transmission layers of the second PUSCH is the same as the maximum number of transmission layers of the third PUSCH.

In this case, the terminal device receives two first parameters, and the two first parameters respectively include a first maximum number of transmission layers and a second maximum number of transmission layers. The two first parameters are the corresponding SRS resource set configuration parameters, respectively. For specific configurations, please refer to the third RRC configuration.

As shown in FIG. 7, in the wireless communication method according to the embodiment of the present disclosure, a first PUSCH and a second PUSCH transmitted by a first PUSCH transmission scheme are scheduled respectively by first DCI and second DCI. As shown in FIG. 8, when the first PUSCH and the second PUSCH overlap in a time domain, the following operation S801 is contained.

At S801, if the power of the first PUSCH and the power of the second PUSCH exceed the maximum power, the terminal device transmits the first PUSCH and/or the second PUSCH according to a power control priority order.

It should be noted that the wireless communication method illustrated in FIG. 8 may be implemented independently of the wireless communication methods illustrated in FIG. 2, FIG. 3 or FIG. 4, or may be implemented together with the wireless communication methods illustrated in FIG. 2, FIG. 3 or FIG. 4.

In the wireless communication method according to the embodiment of the present disclosure, the first PUSCH and the second PUSCH may overlap in the time domain as shown in FIG. 7, but is not limited to overlap as shown in FIG. 7.

The power of the first PUSCH and the power of the second PUSCH is the power required for transmitting the first PUSCH, which is not the real transmission power.

When the power of the first PUSCH and the power of the second PUSCH exceed the maximum power, the terminal device regulates the power of the first PUSCH and the second PUSCH according to a power control priority order to obtain the regulated power, and transmits the first PUSCH and the second PUSCH based on the regulated power. The power control priority order includes a power allocation priority order of the first PUSCH and the second PUSCH.

The terminal device may reduce the power of the first PUSCH or the second PUSCH, and transmit the PUSCH based on the reduced power.

In an example, the terminal device may reduce the power of the first PUSCH. In this case, the terminal device transmits the first PUSCH based on the reduced power of the first PUSCH and transmits the second PUSCH based on the power of the second PUSCH.

In an example, the terminal device may reduce the power of the second PUSCH. In this case, the terminal device transmits the second PUSCH based on the reduced power of the second PUSCH, and transmits the first PUSCH based on the power of the first PUSCH.

It can be understood that if the power control priority order is that the first PUSCH is higher than the second PUSCH, the terminal device reduces the power of the second PUSCH. If the priority order of the power control is that the second PUSCH is higher than the first PUSCH, the terminal device reduces the power of the first PUSCH.

In some embodiments, the terminal device determines a power control priority order based on reception times of the first DCI and the second DCI.

In some examples, the power control priority order is determined according to at least one of following first factor and second factor.

The first factor is a relationship between a first time interval and a first duration, the first time interval is a time interval between a reception time of the third DCI and a transmission time of a third PUSCH, the third DCI is a DCI received later among the first DCI and the second DCI, and the third PUSCH is a PUSCH transmitted first among the first PUSCH and the second PUSCH.

The second factor is a priority of the first PUSCH and the second PUSCH.

The first factor represents a time relationship between a time interval (i.e. the first time interval) between the later received DCI among the first DCI and the second DCI and the first transmitted PUSCH and a set first duration. When the first time interval is greater than or equal to the first duration, it indicates that the terminal device has enough time to process any one of the first PUSCH and the second PUSCH. When the first time interval is less than the first duration, it indicates that there is not enough time left for the terminal device to process the first transmitted PUSCH, and in this case, the terminal device can only reduce the power of the later transmitted PUSCH.

In some embodiments, the first time interval is a time interval between the third DC and the first symbol of the third PUSCH.

The priority of the first PUSCH and the priority of the second PUSCH in the second factor may be determined based on one of: a priority index (i.e. a first priority index) of the first PUSCH and a priority index (i.e. a second priority index) of the second PUSCH; and priorities of contents carried by the first PUSCH and the second PUSCH.

In some embodiments, the priority of the first PUSCH and the priority of the second PUSCH are determined based on the first priority index and the second priority index. When the priority indicated by the first priority index is higher than the priority of the second PUSCH, the priority of the first PUSCH is higher than the priority of the second PUSCH.

In some embodiments, the priority of the first PUSCH and the priority of the second PUSCH are determined based on the priorities of the contents carried by the first PUSCH and the second PUSCH.

The content which may be carried by the PUSCH includes one of a hybrid automatic repeat request acknowledgement (HARQ-ACK) and channel state information (CSI). In this case, the priority of the HARQ-ACK may be higher than the priority of the CSI.

In an example, if the first PUSCH carries the HARQ-ACK and the second PUSCH carries the CSI, the priority of the first PUSCH is higher than the priority of the second PUSCH.

In some embodiments, the priority of the first PUSCH and the priority of the second PUSCH are determined based on the first priority index, the second priority index and the priorities of the contents carried by the first PUSCH and the second PUSCH.

When the first priority index is the same as the second priority index, the priority of the first PUSCH and the priority of the second PUSCH may be determined based on the priorities of contents carried by the first PUSCH and the second PUSCH.

In the embodiment of the present disclosure, the terminal device may determine the power allocation priority order of the first PUSCH and the second PUSCH according to the first factor, or may determine the power allocation priority order of the first PUSCH and the second PUSCH according to the second factor, or may determine the power allocation priority order of the first PUSCH and the second PUSCH according to the first factor and the second factor.

In some embodiments, if the first time interval is greater than or equal to the first duration, the power control priority order is that the priority of the first PUSCH is greater than the priority of the second PUSCH, or the priority of the second PUSCH is greater than the priority of the first PUSCH. Alternatively, if the first time interval is less than the first duration, the power control priority is that the priority of the fourth PUSCH is greater than the priority of the third PUSCH, and the fourth PUSCH is another PUSCH other than the third PUSCH among the first PUSCH and the second PUSCH.

In this case, the terminal device determines the power allocation priority order of the first PUSCH and the second PUSCH according to the first factor.

In some embodiments, if the first time interval is greater than or equal to the first duration, and the priority of the first PUSCH is greater than the priority of the second PUSCH, the power control priority order is that the first PUSCH is greater than the second PUSCH. Alternatively, if the first time interval is greater than or equal to the first duration, and the priority of the second PUSCH is greater than the priority of the first PUSCH, the power control priority order is that the second PUSCH is greater than the first PUSCH.

In this case, the terminal device determines the power allocation priority order of the first PUSCH and the second PUSCH according to the first factor and the second factor.

It can be understood that if the first time interval is greater than or equal to the first duration and the priority of the first PUSCH is greater than the priority order of the second PUSCH, the power control priority order is that the first PUSCH is greater than the second PUSCH. If the first time interval is greater than or equal to the first duration and the priority of the first PUSCH is less than the priority order of the second PUSCH, the power control priority order is that the second PUSCH is greater than the first PUSCH. If the first time interval is less than the first duration, the power control priority order is that the fourth PUSCH is greater than the third PUSCH, and the fourth PUSCH is the PUSCH transmitted later among the first PUSCH and the second PUSCH.

In the wireless communication method according to the embodiment of the present disclosure, when the first PUSCH and the second PUSCH are transmitted, the power of the first PUSCH and the power of the second PUSCH are regulated based on the reception time of the first DCI and the second DCI for scheduling the first PUSCH and the second PUSCH and the transmission time of the first PUSCH and the second PUSCH, so that the regulated real transmission power of the first PUSCH and he regulated real transmission power of the second PUSCH satisfies the maximum power requirement. The power of the first PUSCH and the power of the second PUSCH are regulated based on the reception time of the first DCI and the second DCI by considering the processing time and processing capability of the terminal device, so that the real transmission power of the terminal device satisfies the maximum power requirement while satisfying the capability of the terminal device.

Hereinafter, the wireless communication method according to the embodiment of the present disclosure will be further described by taking the association of the maximum transmission parameter and the SRS resource set in the spatial parameter as an example.

The wireless communication method according to the embodiment of the present disclosure can be implemented as, but is not limited to, the following embodiments.

In the first embodiment, the network device is respectively configured with maximum numbers of transmission layers corresponding to two SRS resource sets and a maximum number of transmission layers during single-TRP transmission.

The terminal device receives the first maximum number of transmission layers, the second maximum number of transmission layers and the third maximum number of transmission layers configured by the network device.

The first maximum number of transmission layers and the second maximum number of transmission layers respectively configure the maximum numbers of transmission layers for two SRS resource sets in the SDM scheme or SFN scheme for simultaneous transmission of multiple panels, and the third maximum number of transmission layers is the maximum number of transmission layers dependently configured for single-panel transmission or single-TRP transmission.

In some embodiments, the first maximum number of transmission layers is associated with the first spatial parameter, the second maximum number of transmission layers is associated with the second spatial parameter, and the third maximum number of transmission layers is the maximum number of transmission layers during the single-panel transmission or single-TRP transmission.

The first spatial parameter is a spatial parameter associated with the first SRS resource set of the SDM scheme, and the second spatial parameter is a spatial parameter associated with the second SRS resource set of the SDM scheme. The spatial parameter includes at least one of TCI state information, antenna panel information, control resource set (CORESET) group information (coresetPoolIndex), an SRS resource set, and beam information.

The first maximum number of transmission layers and the second maximum number of transmission layers are used for simultaneous multi-panel transmission. The third maximum number of transmission layers is for single-panel transmission or single -TRP transmission.

In some embodiments, the first maximum number of transmission layers, the second maximum number of transmission layers and the third maximum number of transmission layers satisfy at least one of the following conditions.

The sum of the first maximum number of transmission layers and the second maximum number of transmission layers is the same as the third maximum number of transmission layers.

The sum of the first maximum number of transmission layers and the second maximum number of transmission layers is independent of the third maximum number of transmission layers, that is, the sum of the first maximum number of transmission layers and the second maximum number of transmission layers may be greater than, equal to or less than the third maximum number of transmission layers.

Every two of the first maximum number of transmission layers, the second maximum number of transmission layers and the third maximum number of transmission layers may be different.

Each of the first maximum number of transmission layers, the second maximum number of transmission layers and the third maximum number of transmission layers is an integer multiple of 2. In an example, the first maximum number of transmission layers is 2, the second maximum number of transmission layers is 2, and the third maximum number of transmission layers is 4. Alternatively, the first maximum number of transmission layers is 1, the second maximum number of transmission layers is 1, and the third maximum number of transmission layers is 4. Alternatively, the first maximum number of transmission layers is 1, the second maximum number of transmission layers is 2, and the third maximum number of transmission layers is 4. Alternatively, the first maximum number of transmission layers is 4, the second maximum number of transmission layers is 2, and the third maximum number of transmission layers is 4.

In the embodiment of the present disclosure, the PUSCH transmission scheme is determined according to the first information.

If the first information indicates that the PUSCH transmission scheme is a single-panel transmission or single-TRP transmission or a TDM transmission, the terminal device determines information associated with the third transmission parameter according to the third maximum number of transmission layers. The determined third transmission parameter includes at least one of indications associated with a TPMI, a SRI, a PTRS and a DMRS, etc. The information associated with the third transmission parameter includes at least one of the number of bits in an information field for carrying the third transmission parameter, and a set of ranges (corresponding TPMI table in the protocol) to which the third transmission parameter belongs.

In codebook-based PUSCH transmission, the third transmission parameter includes indications associated with a TPMI, a PTRS and a DMRS. In non-codebook-based PUSCH transmission, the transmission parameters include indications associated with a SRI, a PTRS and a DMRS.

The third maximum number of transmission layers supported by the third TPMI domain is less than or equal to the third maximum number of transmission layers.

If the first information indicates that the PUSCH transmission scheme is an SDM transmission scheme or an SFN transmission scheme, the terminal device determines information associated with the first transmission parameter according to the first maximum number of transmission layers, and determines information associated with the second transmission parameter according to the second maximum number of transmission layers. The determined first transmission parameter includes at least one of indications associated with a TPMI, a SRI, a PTRS and a DMRS, and the like. The information associated with the first transmission parameter includes at least one of the number of bits in an information field for carrying the first transmission parameter, and a set of ranges (corresponding TPMI table in the protocol) to which the first transmission parameter belongs. The determined second transmission parameter includes at least one of indications associated with a TPMI, a SRI, a PTRS and a DMRS, and the like. The information associated with the second transmission parameter includes at least one of the number of bits in an information field for carrying the second transmission parameter, and a set of ranges (corresponding TPMI table in the protocol) to which the second transmission parameter belongs.

The set of ranges may represent the range of values of the third transmission parameter, and different maximum number of transmission layers correspond to different tables, the range of values in different tables are different.

In an example, the maximum number of transmission layers is 2, and the number of bits of TPMI is 4 bits (a codebook subset of PUSCH transmission is configured as an incoherent codebook) or 5 bits (the codebook subset of PUSCH is configured as a partially coherent or incoherent codebook), and the set of ranges is shown in Table 1, the TPMI values are different for different number of transmission layers in Table 1.

**Table 1. Example 1 of the set of ranges**

| Bit-field mapping index | Codebook subset = partially coherent & incoherent | Bit-field mapping index | Codebook subset = incoherent |
|---|---|---|---|
| 0 | the number of transmission layers is 1 (1 layer): | 0 | the number of transmission layers is 1 layer: |
| | the pre-coding matrix index is TPMI = 0 | | the pre-coding matrix index is TPMI = 0 |
| 1 | the number of transmission layers is 1 layer: | 1 | the number of transmission layers is 1 layer: |
| | the pre-coding matrix index is TPMI = 1 | | the pre-coding matrix index is TPMI = 1 |
| ... | ... | ... | ... |
| 3 | the number of transmission layers is 1 layer: | 3 | the number of transmission layers is 1 layer: |
| | the pre-coding matrix index is TPMI = 3 | | the pre-coding matrix index is TPMI = 3 |
| 4 | the number of transmission layers is 2 layers: | 4 | the number of transmission layers is 2 layers: |
| | the pre-coding matrix index is TPMI = 0 | | the pre-coding matrix index is TPMI = 0 |
| ... | ... | ... | ... |
| 9 | the number of transmission layers is 2 layers: | 9 | the number of transmission layers is 2 layers: |
| | the pre-coding matrix index is TPMI = 5 | | the pre-coding matrix index is TPMI = 5 |
| 10 | the number of transmission layers is 1 layer: | 10 | the number of transmission layers is 1 layer: |
| | the pre-coding matrix index is TPMI = 13 | | the pre-coding matrix index is TPMI = 13 |
| 11 | the number of transmission layers is 2 layers: | 11 | the number of transmission layers is 2 layers: |
| | the pre-coding matrix index is TPMI = 6 | | the pre-coding matrix index is TPMI = 6 |
| 12 | the number of transmission layers is 1 layer: | 12 -15 | Reserved |
| | the pre-coding matrix index is TPMI = 4 | | |
| ... | ... | | |
| 20 | the number of transmission layers is 1 layer: | | |
| | the pre-coding matrix index is TPMI = 12 | | |
| 21 | the number of transmission layers is 1 layer: | | |
| | the pre-coding matrix index is TPMI = 14 | | |
| 22 | the number of transmission layers is 1 layer: | | |
| | the pre-coding matrix index is TPMI = 15 | | |
| 23 | the number of transmission layers is 2 layers: | | |
| | the pre-coding matrix index is TPMI = 7 | | |
| ... | ... | | |
| 29 | the number of transmission layers is 2 layers: | | |
| | the pre-coding matrix index is TPMI = 13 | | |
| 30-31 | Reserved | | |

In an example, the maximum number of transmission layers is 3 or 4, and the number of bits of TPMI is 4 bits (the codebook subset of PUSCH transmission is configured as an incoherent codebook) or 6 bits (the codebook subset of PUSCH is configured as a partially coherent or incoherent codebook). The set of ranges is shown in Table 2, and the TPMI values are different for different number of transmission layers in Table 2.

**Table 2. Example 2 of the set of ranges**

| Bit-field mapping index | Codebook subset = partially coherent & incoherent | Bit-field mapping index | Codebook subset = incoherent |
|---|---|---|---|
| 0 | the number of transmission layers is 1 layer: | 0 | the number of transmission layers is 1 layer: |
| | the pre-coding matrix index is TPMI = 0 | | the pre-coding matrix index is TPMI = 0 |
| 1 | the number of transmission layers is 1 layer: | 1 | the number of transmission layers is 1 layer: |
| | the pre-coding matrix index is TPMI = 1 | | the pre-coding matrix index is TPMI = 1 |
| ... | ... | ... | ... |
| 3 | the number of transmission layers is 1 layer: | 3 | the number of transmission layers is 1 layer: |
| | the pre-coding matrix index is TPMI = 3 | | the pre-coding matrix index is TPMI = 3 |
| 4 | the number of transmission layers is 2 layers: | 4 | the number of transmission layers is 2 layers: |
| | the pre-coding matrix index is TPMI = 0 | | the pre-coding matrix index is TPMI = 0 |
| ... | ... | ... | ... |
| 9 | the number of transmission layers is 2 layers: | 9 | the number of transmission layers is 2 layers: |
| | the pre-coding matrix index is TPMI = 5 | | the pre-coding matrix index is TPMI = 5 |
| 10 | the number of transmission layers is 3 layers: | 10 | the number of transmission layers is 3 layers: |
| | the pre-coding matrix index is TPMI = 0 | | the pre-coding matrix index is TPMI = 0 |
| 11 | the number of transmission layers is 4 layers: | 11 | the number of transmission layers is 4 layers: |
| | the pre-coding matrix index is TPMI = 0 | | the pre-coding matrix index is TPMI = 0 |
| 12 | the number of transmission layers is 1 layer: | 12 | the number of transmission layers is 1 layer: |
| | the pre-coding matrix index is TPMI = 13 | | the pre-coding matrix index is TPMI = 13 |
| 13 | the number of transmission layers is 2 layers: | 13 | the number of transmission layers is 2 layers: |
| | the pre-coding matrix index is TPMI = 6 | | the pre-coding matrix index is TPMI = 6 |
| 14 | the number of transmission layers is 3 layers: | 14 | the number of transmission layers is 3 layers: |
| | the pre-coding matrix index is TPMI = 1 | | the pre-coding matrix index is TPMI = 1 |
| 15 | the number of transmission layers is 1 layer: | 15 | Reserved |
| | the pre-coding matrix index is TPMI = 4 | | |
| ... | ... | | |
| 23 | the number of transmission layers is 1 layer: | | |
| | the pre-coding matrix index is TPMI = 12 | | |
| 24 | the number of transmission layers is 1 layer: | | |
| | the pre-coding matrix index is TPMI = 14 | | |
| 25 | the number of transmission layers is 1 layer: | | |
| | the pre-coding matrix index is TPMI = 15 | | |
| 26 | the number of transmission layers is 2 layers: | | |
| | the pre-coding matrix index is TPMI = 7 | | |
| ... | ... | | |
| 32 | the number of transmission layers is 2 layers: | | |
| | the pre-coding matrix index is TPMI = 13 | | |
| 33 | the number of transmission layers is 3 layers: | | |
| | the pre-coding matrix index is TPMI = 2 | | |
| 34 | the number of transmission layers is 4 layers: | | |
| | the pre-coding matrix index is TPMI = 1 | | |
| 35 | the number of transmission layers is 4 layers: | | |
| | the pre-coding matrix index is TPMI = 2 | | |
| 36-63 | Reserved | | |

In an example, in non-codebook-based PUSCH transmission, when the maximum number of transmission layers is 11, the number of bits of the SRI is 1 bit when the number of SRS resources in the SRS resource set is 2, the number of bits of SRI is 2 bits when the number of SRS resources is 3, and the number of bits of SRI is 2 bits when the number of SRS resources is 4. The set of ranges is shown in Table 3.

**Table 3. Example 3 of the set of ranges**

| Bit-field mapping index | SRI (s), *N_{SRS}* = 2 | Bit-field mapping index | SRI (s), *N_{SRS}* = 3 | Bit-field mapping index | SRI (s), *N_{SRS}* = 4 |
|---|---|---|---|---|---|
| 0 | 0 | 0 | 0 | 0 | 0 |
| 1 | 1 | 1 | 1 | 1 | 1 |
| 2 | 0.1 | 2 | 2 | 2 | 2 |
| 3 | reserved | 3 | 0, 1 | 3 | 3 |
| | | 4 | 0, 2 | 4 | 0, 1 |
| | | 5 | 1, 2 | 5 | 0, 2 |
| | | 6-7 | reserved | 6 | 0, 3 |
| | | | | 7 | 1,2 |
| | | | | 8 | 1, 3 |
| | | | | 9 | 2, 3 |
| | | | | 10-15 | Reserved |

The set of ranges in embodiments of the present disclosure includes, but is not limited to, the set of ranges shown in Table 1, Table 2 and Table 3.

In the codebook-based PUSCH transmission, the first transmission parameter and/or the second transmission parameter include a TPMI, and indicators associated with a PTRS and a DMRS. In the non-codebook-based PUSCH transmission, the first transmission parameter and/or the second transmission parameter include a SRI, indicators associated with the PTRS and the DMRS.

The first transmission parameter is associated with the first spatial parameter, and the second transmission parameter is associated with the second spatial parameter.

The terminal device determines the number of bits in the first TPMI domain according to the first maximum number of transmission layers, and the number of transmission layers indicated by the first TPMI domain is less than or equal to the first maximum number of transmission layers, and the terminal device determines the number of bits in the second TPMI domain according to the second maximum number of transmission layers, and the number of transmission layers indicated by the second TPMI domain is less than or equal to the second maximum number of transmission layers.

The first information may include an SRS resource set indicator or a set information field in DCI signaling. The first information may also be high-layer signaling, such as a RRC signaling or a MAC signaling.

Taking the SRS resource set indicator as an example of the first information, the SRS resource set indicator is 00 or 01 indicating an SRS resource set, and the third transmission parameter is determined according to the third maximum number of transmission layers. If the SRS resource set indicator is 10 or 11 indicating two SRS resource sets, the first transmission parameter is determined according to the first maximum number of transmission layers and the second transmission parameter is determined according to the second maximum number of transmission layers.

In some embodiments, one of the first maximum number of transmission layers and the second maximum number of transmission layers and the third maximum number of transmission layers are associated with the same SRS resource set, the other of the first maximum number of transmission layers and the second maximum number of transmission layers is associated with another SRS resource set.

It can be understood that the terminal device supports a multi-panel simultaneous transmission scheme, and the network device configures two SRS resource sets for the terminal device.

In some embodiments, the first maximum number of transmission layers and the second maximum number of transmission layers are configured in high-layer parameters such as SRS-ResourceSet, PUSCH-Config and PUSCH-ServingCellConfig, and the third maximum number of transmission layers is configured in high-layer parameters such as PUSCH-Config and PUSCH-ServingCellConfig.

In some embodiments, the number of SRS resources included in the first SRS resource set may be the same as or different from the number of SRS resources included in the second SRS resource set.

In the non-codebook transmission, the number of SRS ports of the SRS resource sindicated by the SRI in the first transmission parameter may be the same as or different from the number of SRS ports of the SRS resources indicated by the SRI in the second transmission parameter.

In an example, a possible first RRC configuration is described as follows:

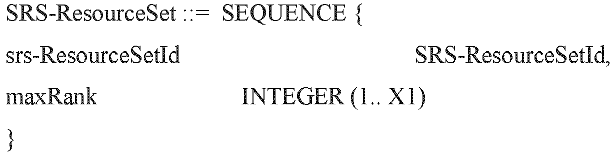

X1 denotes the first maximum number of transmission layers.

In an example, a possible second RRC configuration is described as follows:

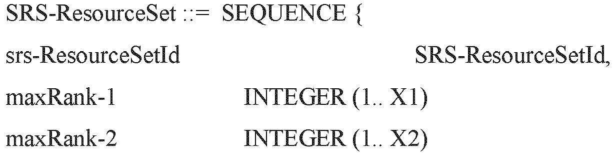

X2 denotes the second maximum number of transmission layers.

In an example, a possible third RRC configuration is described as follows:

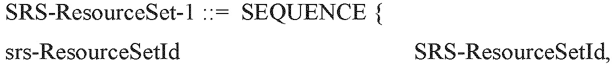

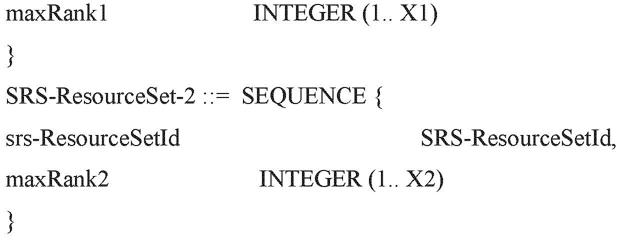

X1 denotes the first maximum number of transmission layers. X2 denotes the second maximum number of transmission layers.

In an example, a possible fourth RRC configuration is described as follows:

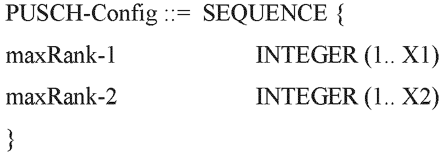

X1 denotes the first maximum number of transmission layers. X2 denotes the second maximum number of transmission layers.

The RRC configuration in the embodiment of the present disclosure includes, but is not limited to, the above-described first RRC configuration, the second RRC configuration and the third RRC configuration.

In the above-described first embodiment according to the embodiment of the present disclosure, the network device directly configures the first maximum number of transmission layers, the second maximum number of transmission layers and the third maximum number of transmission layers to the terminal device, and the corresponding different maximum numbers of transmission layers can be used for different PUSCH transmission schemes (that is, multi-panel simultaneous transmission (the first PUSCH transmission scheme) or single-panel transmission or single-TRP transmission (the second PUSCH transmission scheme)), thereby simplifying implementation of the terminal.

In the second embodiment, the network device configures the maximum number of transmission layers of the single-TRP transmission and the maximum number of transmission layers corresponding to one SRS resource set.

The terminal device receives the first maximum number of transmission layers and the third maximum number of transmission layers configured by the network device.

In a possible embodiment, the second maximum number of transmission layers is a default value (e.g. 2).

In a possible embodiment, the second maximum number of transmission layers is a difference between the first maximum number of transmission layers and the third maximum number of transmission layers.

In a possible embodiment, the second maximum number of transmission layers is the same as the third maximum number of transmission layers.

In a possible embodiment, the second maximum number of transmission layers is the same as the first maximum number of transmission layers.

In a possible embodiment, the second maximum number of transmission layers is obtained by subtracting the first maximum number of transmission layers from 4.

In the embodiment of the present disclosure, the PUSCH transmission scheme is determined according to the first information.

If the first information indicates that the PUSCH transmission scheme is a single-panel transmission or single-TRP transmission or a TDM transmission.

The terminal device determines information associated with the third transmission parameter according to the third maximum number of transmission layers. The determined third transmission parameter includes at least one of indications associated with a TPMI, a SRI, a PTRS and a DMRS, and the like. The information associated with the third transmission parameter includes at least one of the number of bits in an information field for carrying the third transmission parameter, and a set of ranges to which the third transmission parameter belongs (corresponding TPMI table in the protocol).

In the codebook-based PUSCH transmission, the third transmission parameter includes indications associated with a TPMI, a PTRS and a DMRS. In the non-codebook-based PUSCH transmission, the transmission parameters include indications associated with a SRI, a PTRS and a DMRS.

The third maximum number of transmission layers supported by the third TPMI domain is less than or equal to the third maximum number of transmission layers.

If the first information indicates that the PUSCH transmission scheme is an SDM transmission scheme or an SFN transmission scheme.

The terminal device determines information associated with the first transmission parameter according to the first maximum number of transmission layers, and determines information associated with the second transmission parameter according to the second maximum number of transmission layers. The determined first transmission parameter includes at least one of indications associated with a TPMI, a SRI, a PTRS and a DMRS, and the like. The information associated with the first transmission parameter includes at least one of the number of bits in an information field for carrying the first transmission parameter, and a set of ranges (corresponding TPMI table in the protocol) to which the first transmission parameter belongs. The determined second transmission parameter includes at least one of indications associated with a TPMI, an SRI, a PTRS and a DMRS, and the like. The information associated with the second transmission parameter includes at least one of the number of bits in an information field for carrying the second transmission parameter, and a set of ranges (corresponding TPMI table in the protocol) to which the second transmission parameter belongs.

In the codebook-based PUSCH transmission, the first transmission parameter and/or the second transmission parameter include a TPMI, and indicators associated with the PTRS and the DMRS. In the non-codebook-based PUSCH transmission, the first transmission parameter and/or the second transmission parameter include a SRI, and indicators associated with the PTRS and the DMRS.

The first transmission parameter is associated with the first spatial parameter, and the second transmission parameter is associated with the second spatial parameter.

The terminal device determines the number of bits in the first TPMI domain according to the first maximum number of transmission layers, and the number of transmission layers indicated by the first TPMI domain is less than or equal to the first maximum number of transmission layers. The terminal device determines the number of bits in the second TPMI domain according to the second maximum number of transmission layers, and the number of transmission layers indicated by the second TPMI domain is less than or equal to the second maximum number of transmission layers. In a possible embodiment, the number of bits of the first TPMI is the same as the number of bits of the second TPMI.

In an example, the third maximum number of transmission layers is 4, the first maximum number of transmission layers is 2, the second maximum number of transmission layers is the same as the third maximum number of transmission layers, which is 4. The second TPMI domain indicates the pre-coding matrix and the number of transmission layers with the maximum number of transmission layers of 4, the first TPMI domain only indicates the pre-coding matrix and the number of transmission layers with the maximum number of transmission layers of 2, and the first TPMI domain does not indicate the number of transmission layers of 4, thereby reducing the number of bits in the first TPMI domain.

In the second embodiment according to the embodiment of the present disclosure, switching occurs between single-TRP transmission or single-Panel transmission (the second PUSCH transmission scheme) and multi-panel simultaneous transmission (the second PUSCH transmission scheme), and the third maximum number of transmission layers may be the same as a maximum number of transmission layers associated with the second PUSCH transmission scheme, and in this case, the first transmission information or the second transmission information and the third transmission information may be determined according to the maximum number of transmission layers having the same value. Therefore, the information domain has the same number of bits, the total number of bits in the DCI containing the information domain will not change, which facilitates monitoring the DCI by the UE and reduces the number of blind detection of UE.

In the third embodiment, the network device configures maximum numbers of transmission layers corresponding to two SRS resource sets. The maximum number of transmission layers during single TRP transmission is the sum of the maximum numbers of transmission layers corresponding to the two SRS resource sets.

The terminal device receives a first maximum number of transmission layers and a second maximum number of transmission layers configured by the network device, and the third maximum number of transmission layers is a sum of the first maximum number of transmission layers and the second maximum number of transmission layers.

In a possible embodiment, the first maximum number of transmission layers and the second maximum number of transmission layers are configured in high-layer parameters PUSCH-Config and PUSCH-ServingCellConfig. Since the two maximum numbers of transmission layers are read during the single-TRP transmission or single-Panel transmission. Since only one SRS resource set is configured for the single-TRP transmission or single-Panel transmission, the SRS resource set cannot be configured in the high-layer parameters of the SRS resource set.

In the fourth embodiment, the network device configures the maximum number of transmission layers during the single-TRP transmission, and the maximum numbers of transmission layers corresponding to the two SRS resource sets have default values.

The terminal device receives a third maximum number of transmission layers configured by the network device. The first maximum number of transmission layers and the second maximum number of transmission layers have default values.

According to the second to fourth embodiments provided by the embodiments of the present disclosure, the network device only configures a part of the maximum numbers of transmission layers, thereby saving the signaling.

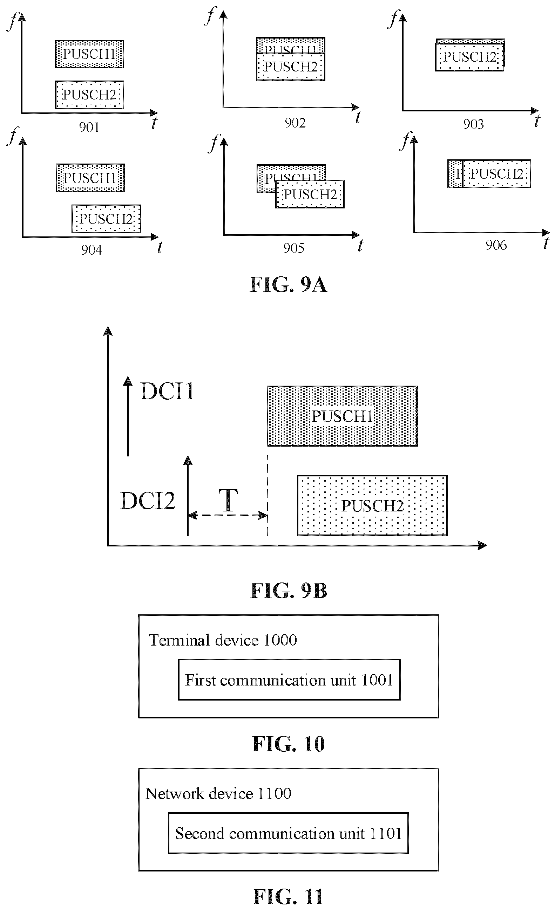

In the fifth embodiment, when the PUSCHs scheduled by different pieces of DCI in multiple pieces of DCI partially overlap or completely overlap in the time domain, how to perform power control to enable the total power of simultaneous transmission of two panels to meet the maximum power requirement is a problem need to be solved. As shown in FIG. 9A, PUSCH1 and PUSCH2 are scheduled by different pieces of DCI, and PUSCH1 and PUSCH2 partially overlap or completely overlap in the time domain. In 901, PUSCH1 and PUSCH2 completely overlap in the time domain and do not overlap in the frequency domain. In 902, PUSCH1 and PUSCH2 completely overlap in the time domain and partially overlap in the frequency domain. In 903, PUSCH1 and PUSCH2 completely overlap in the time domain and completely overlap in the frequency domain. In 904, PUSCH1 and PUSCH2 partially overlap in the time domain and do not overlap in the frequency domain. In 905, PUSCH1 and PUSCH2 partially overlap in the time domain and partially overlap in the frequency domain. In 906, PUSCH1 and PUSCH2 partially overlap in the time domain and completely overlap in the frequency domain.

In the wireless communication method according to the embodiment of the present disclosure, if the power of the first PUSCH and the power of the second PUSCH exceeds the maximum power, the terminal device determines power control priority according to the reception time of two pieces of DCIs scheduling the two PUSCHs.

In a first manner, when the UE receives first DCI first, the terminal device determines a time interval between the time at which second DCI is received and the first symbol of the first PUSCH, and if the determined time interval T is greater than or equal to first processing time, the terminal device reduces the power of the first PUSCH or the second PUSCH. Conversely, if T is less than the first processing time, the power of the second PUSCH is reduced to meet the maximum power requirement.

In an example, as illustrated in FIG. 9B, DCI1 schedules PUSCH1 and DCI2 schedules PUSCH2, DCI2 is the one which received later, the transmission time of PUSCH 1 is earlier than the transmission time of PUSCH2. In this case, T is a time interval between the reception time of DCI2 and the transmission time of PUSCH1.

In a second manner, the terminal device determines the power control priority according to the reception time of the two pieces of DCI scheduling the two PUSCHs and the priority of the first PUSCH and the second PUSCH.

On the basis of the first manner, when T is greater than or equal to the first processing time, the power of the PUSCH having a lower priority among the first PUSCH and the second PUSCH is reduced. The descending order of priority of PUSCH is: a PUSCH having larger priority index; when the priority indexes of two PUSCHs is the same, the priority order is a PUSCH carrying HARQ-ACK, a PUSCH carrying CSI, a PUSCH not carrying HARQ and CSI.

In some embodiments, the terminal device determines whether to dynamically regulate the power of the first PUSCH and the power of the second PUSCH according to the power control capability of the UE. If the UE reports that the first power control capability is supported, the power is regulated in the first manner or the second manner, If the UE does not report that the first power control capability is supported, the two panels allocate the maximum transmission power in a semi-static manner.

The power control capabilities supported by the UE include the first power control capability in which the power of two panels can be dynamically regulated, and the second power control capability in which the power of two panels cannot be dynamically regulated.

The preferred embodiments of the present disclosure have been described in detail above with reference to the accompanying drawings, but the present disclosure is not limited to the specific details in the above-described embodiments. Within the scope of the technical concept of the present disclosure, a variety of simple modifications can be made to the technical solutions of the present disclosure, and these simple modifications all belong to the scope of protection of the present disclosure. For example, various specific technical features described in the above-described embodiments may be combined in any suitable manner without contradiction, and various possible combinations are not be described separately in the present disclosure in order to avoid unnecessary repetition. For example, various embodiments of the present disclosure may be combined arbitrarily, and as long as they do not contradict the idea of the present disclosure, they should be regarded as the disclosure of the present disclosure as well. For another example, various embodiments described in the present disclosure and/or the technical features in the embodiments may be arbitrarily combined with the prior art, and the technical solution obtained after the combination should also fall within the scope of protection of the present disclosure.

It should also be understood that in various method embodiments of the present disclosure, the size of the serial numbers of the above-described processes does not mean an execution sequence, and the execution sequence of the processes should be determined by the function and internal logic thereof, and should not constitute any limitation on the implementation of the embodiments of the present disclosure. In addition, in the embodiment of the present disclosure, the terms "downlink", "uplink" and "sidelink" indicate a transmission direction of a signal or data. The "downlink" indicates that the transmission direction of the signal or data is a first direction transmitted from a station to a user equipment of the cell, and the "uplink" indicates that the transmission direction of the signal or data is a second direction transmitted from the user equipment of the cell to the station. The "sidelink" indicates that a transmission direction of the signal or data is a third direction transmitted from the user equipment 1 to the user equipment 2. For example, "downlink signal" indicates that the transmission direction of the signal is the first direction. In addition, in the embodiment of the present disclosure, the term "and/or" is only one kind of association relationship describing associated objects, and indicates that there may be three relationships. Specifically, A and/or B may represent three cases of A alone, A and B simultaneously, and B alone. In addition, the character "/" herein generally indicates that the associated objects before and after are in an "or" relationship.

FIG. 10 is a schematic structural composition diagram of a terminal device according to an embodiment of the present disclosure, and as shown in FIG. 10, the terminal device 1000 includes a first communication unit 1001.

The first communication unit 1001 is configured to receive at least one maximum number of transmission layers transmitted by the network device. The at least one maximum number of transmission layers is configured to determine a first maximum number of transmission layers, a second maximum number of transmission layers, and/or the at least one maximum number of transmission layers is configured to determine a third maximum number of transmission layers. The first maximum number of transmission layers and the second maximum number of transmission layers is used for a first PUSCH transmission scheme associated with two different spatial parameters, the third maximum number of transmission layers is used for a second PUSCH transmission scheme associated with one spatial parameter.

It is understood that the terminal device further includes a first storage unit configured to store and receive the spatial parameters.

In some embodiments, the first PUSCH transmission scheme is used for the transmission of a first PUSCH and a second PUSCH, the first PUSCH and the second PUSCH overlap in the time domain, and the second PUSCH transmission scheme is used for transmission of a third PUSCH.

In some embodiments, the at least one maximum number of transmission layers includes the first maximum number of transmission layers, the second maximum number of transmission layers and the third maximum number of transmission layers.

In some embodiments, the first maximum number of transmission layers, the second maximum number of transmission layers and the third maximum number of transmission layers satisfy at least one of the following conditions.

The sum of the first maximum number of transmission layers and the second maximum number of transmission layers is the same as the third maximum number of transmission layers.

The sum of the first maximum number of transmission layers and the second maximum number of transmission layers is independent of the third maximum number of transmission layers.

Every two of the first maximum number of transmission layers, the second maximum number of transmission layers and the third maximum number of transmission layers may be different.

In some embodiments, the first maximum number of transmission layers is associated with the first spatial parameter of the two different spatial parameters, the second maximum number of transmission layers is associated with the second spatial parameter of the two different spatial parameters, and the third maximum number of transmission layers is associated with a third spatial parameter associated with the second PUSCH transmission scheme.

In some embodiments, the at least one maximum number of transmission layers includes the first maximum number of transmission layers and the third maximum number of transmission layers.

In some embodiments, a value of the second maximum number of transmission layers is one of a first default value, a difference between the first maximum number of transmission layers and the third maximum number of transmission layers, the same value as the third maximum number of transmission layers, and the same value as the first maximum number of transmission layers, and a value obtained by subtracting the first maximum number of transmission layers from a second default value.

In some embodiments, the first PUSCH transmission scheme is associated with the first spatial parameter and the second spatial parameter, the second PUSCH transmission scheme is associated with the third spatial parameter, the first spatial parameter is associated with the first maximum number of transmission layers, and the second spatial parameter is the same as the third spatial parameter. In this case, the value of the second maximum number of transmission layers is the same as the value of the third maximum number of transmission layers.

In some embodiments, the at least one maximum number of transmission layers includes the first maximum number of transmission layers and the second maximum number of transmission layers.

In some embodiments, a value of the third maximum number of transmission layers is one of a third default value, a sum of the first maximum number of transmission layers and the second maximum number of transmission layers, the same value as the first maximum number of transmission layers, and the same value as the second maximum number of transmission layers.

In some embodiments, the at least one maximum number of transmission layers includes the third maximum number of transmission layers.

In some embodiments, a value of the first maximum number of transmission layers is a fourth default value or has the same value as the third maximum number of transmission layers.

The second maximum number of transmission layers is a fifth default value or has the same value as the third maximum number of transmission layers.

In some embodiments, the first PUSCH transmission scheme is associated with the first spatial parameter and the second spatial parameter, and the second PUSCH transmission scheme is associated with the third spatial parameter. If the third spatial parameter is the same as the first spatial parameter or the second spatial parameter, the value of the third maximum number of transmission layers is the same as the value of the first maximum number of transmission layers or the second maximum number of transmission layers.

In some embodiments, at least one of the first maximum number of transmission layers, the second maximum number of transmission layers and the third maximum number of transmission layers is a multiple of 2.

In some embodiments, the first communication unit 1001 is further configured to receive a first parameter transmitted by the network device, and the first parameter includes the at least one maximum number of transmission layers.

In some embodiments, if the at least one maximum number of transmission layers includes the first maximum number of transmission layers and/or the second maximum number of transmission layers, the first parameter includes at least one of a SRS resource set configuration parameter, a PUSCH configuration parameter; and a PUSCH serving cell configuration parameter.

In some embodiments, the at least one maximum number of transmission layers includes the first maximum number of transmission layers and/or the second maximum number of transmission layers, and the third maximum number of transmission layers is the sum of the first maximum number of transmission layers and the second maximum number of transmission layers, and the first parameter includes at least one of a PUSCH configuration parameter, and a PUSCH serving cell configuration parameter.

In some embodiments, if the at least one maximum number of transmission layers includes the third maximum number of transmission layers, the first parameter includes at least one of a PUSCH configuration parameter, and a PUSCH serving cell configuration parameter.

In some embodiments, the first maximum number of transmission layers is used to determine first information, the first information is transmission information associated with a first transmission parameter, and the first transmission parameter is a transmission parameter for indicating transmission of the first PUSCH in the first PUSCH transmission scheme.

The second maximum number of transmission layers is used to determine second information, the second information is transmission information associated with a second transmission parameter, and the second transmission parameter is a transmission parameter for indicating transmission of the second PUSCH in the first PUSCH transmission scheme, and the first PUSCH and the second PUSCH overlap in a time domain.

The third maximum number of transmission layers is used to determine third information, the third information is transmission information associated with a third transmission parameter, and the third transmission parameter is a transmission parameter indicating transmission of the third PUSCH in the second PUSCH transmission scheme.

In some embodiments, the transmission information includes at least one of the number of bits in an information field for carrying the transmission parameter, and a set of ranges to which the transmission parameter belongs.

In some embodiments, the transmission parameter includes at least one of a TPMI, a SRI, indicators associated with a phase-tracking reference signals (PTRS) and a demodulation reference signal (DMRS).

In some embodiments, if the PUSCH transmission is the codebook-based transmission, the transmission parameter includes at least one of the TPMI, the indicators associated with the PTRS and the DMRS.

In some embodiments, the TPMI indicates pre-coding information and the number of transmission layers of the PUSCH, and the number of transmission layers indicated by the TPMI is less than or equal to the maximum number of transmission layers.

In some embodiments, if the PUSCH transmission is the non-codebook transmission, the transmission parameter includes at least one of the SRI, the indicators associated with the PTRS and the DMRS.

In some embodiments, the SRI indicates pre-coding information and the number of transmission layers of the PUSCH, and the number of transmission layers indicated by the SRI is less than or equal to the maximum number of transmission layers.

In some embodiments, the terminal device 1000 further includes a first determination unit configured to determine the first information according to the first maximum number of transmission layers and determine the second information according to the second maximum number of transmission layers if the PUSCH transmission scheme is the first PUSCH transmission scheme.

In some embodiments, the terminal device 1000 further includes a second determination unit configured to determine the third information according to the third maximum number of transmission layers if the PUSCH transmission scheme is the second PUSCH transmission scheme.

In some embodiments, the first communication unit 1001 is further configured to receive a first signaling transmitted by the network device, and the first signaling indicates a type of the PUSCH transmission scheme.

In some embodiments, the first signaling includes at least one of a downlink control information (DCI), a radio resource control (RRC) signaling and a media access control (MAC) signaling.

In some embodiments, if the first signaling is DCI, the SRS resource set indication field carried in the DCI indicates a type of the PUSCH transmission scheme.

In some embodiments, if the SRS resource set indication field has a first value, and the first value indicates two SRS resource sets, the PUSCH transmission scheme is a first PUSCH transmission scheme, and/or, if the SRS resource set indication field has a second value, and the second value indicates one SRS resource set, the PUSCH transmission scheme is a second PUSCH transmission scheme.

In some embodiments, if the second value indicates a first SRS resource set associated with the first maximum number of transmission layers, the third maximum number of transmission layers has the same value as the first maximum number of transmission layers, and/or, if the second value indicates a second SRS resource set associated with the second maximum number of transmission layers, the third maximum number of transmission layers has the same value as a value of the second maximum number of transmission layers.

In some embodiments, the spatial parameter includes at least one of a TCI state, antenna panel information, CORESET group information, SRS resource set information, and beam information.

In some embodiments, the terminal device 1000 further includes a regulation unit configured to transmit the first PUSCH and/or the second PUSCH according to a power control priority order if the power of the first PUSCH and the power of the second PUSCH exceed a maximum power when the first PUSCH and the second PUSCH transmitted by the first PUSCH transmission scheme are respectively scheduled by the first DCI and the second DCI, and the first PUSCH and the second PUSCH overlap in the time domain. The power control priority order includes the power allocation priority order of the first PUSCH and the second PUSCH.

In some embodiments, the power control priority order is determined according to at least one of a relationship between a first time interval and a first duration, and a priority of the first PUSCH and the second PUSCH.

The first time interval is a time interval between a reception time of third DCI and a transmission time of the third PUSCH, the third DCI is a DCI received later among the first DCI and the second DCI, and the third PUSCH is a PUSCH transmitted first among the first PUSCH and the second PUSCH.

In some embodiments, if the first time interval is greater than or equal to the first duration, the power control priority order is that the priority of the first PUSCH is greater than the priority of the second PUSCH, or the priority of the second PUSCH is greater than the priority of the first PUSCH. Alternatively, if the first time interval is less than the first duration, the power control priority is that the priority of the fourth PUSCH is greater than the priority of the third PUSCH, and the fourth PUSCH is another PUSCH other than the third PUSCH among the first PUSCH and the second PUS

In some embodiments, if the first time interval is greater than or equal to the first duration, and the priority of the first PUSCH is greater than the priority of the second PUSCH, the power control priority order is that the priority of the first PUSCH is greater than the priority of the second PUSCH. Alternatively, if the first time interval is greater than or equal to the first duration, and the priority of the second PUSCH is greater than the priority of the first PUSCH, the power control priority order is that the priority of the second PUSCH is greater than the priority of the first PUSCH.

In some embodiments, the first PUSCH and/or the second PUSCH is transmitted according to the power control priority order under the following condition: a power of a first panel and a second panel of the terminal device supports dynamic regulation, the first panel being configured for transmitting the first PUSCH and the second panel being configured for transmitting the second PUSCH.

FIG. 11 is a schematic structural composition diagram of the network device according to the embodiment of the present disclosure. As shown in FIG. 11, the network device 1100 includes a second communication unit 1101.

The second communication unit 1101 is configured to transmit at least one maximum number of transmission layers to the terminal device. The at least one maximum number of transmission layers being configured to determine a first maximum number of transmission layers, a second maximum number of transmission layers, and/or the at least one maximum number of transmission layers is configured to determine a third maximum number of transmission layers. The first maximum number of transmission layers and the second maximum number of transmission layers are used for a first PUSCH transmission scheme associated with two different spatial parameters, and the third maximum number of transmission layers is used for a second PUSCH transmission scheme associated with one spatial parameter.

It is understood that the network device 1100 may further include a third storage unit configured to store the first information.

In some embodiments, the first PUSCH transmission scheme is used for transmission of a first PUSCH and a second PUSCH, the first PUSCH and the second PUSCH overlap in the time domain, and the second PUSCH transmission scheme is used for transmission of a third PUSCH.

In some embodiments, the at least one maximum number of transmission layers includes the first maximum number of transmission layers, the second maximum number of transmission layers and the third maximum number of transmission layers.

In some embodiments, the first maximum number of transmission layers, the second maximum number of transmission layers and the third maximum number of transmission layers satisfy at least one of the following conditions.

A sum of the first maximum number of transmission layers and the second maximum number of transmission layers is the same as the third maximum number of transmission layers.

The sum of the first maximum number of transmission layers and the second maximum number of transmission layers is independent of the third maximum number of transmission layers.

Every two of the first maximum number of transmission layers, the second maximum number of transmission layers and the third maximum number of transmission layers are different.

In some embodiments, the first maximum number of transmission layers is associated with the first spatial parameter of the two different spatial parameters.

The second maximum number of transmission layers is associated with the second spatial parameter of the two different spatial parameters.

The third maximum number of transmission layers is associated with a third spatial parameter associated with the second PUSCH transmission scheme.

In some embodiments, the at least one maximum number of transmission layers includes the first maximum number of transmission layers and the third maximum number of transmission layers.

In some embodiments, a value of the second maximum number of transmission layers is one of a first default value, a difference between the first maximum number of transmission layers and the third maximum number of transmission layers, the same value as the third maximum number of transmission layers, the same value as the first maximum number of transmission layers, and a value obtained by subtracting the first maximum number of transmission layers from a second default value.

In some embodiments, the first PUSCH transmission scheme is associated with the first spatial parameter and the second spatial parameter, the second PUSCH transmission scheme is associated with the third spatial parameter, the first spatial parameter is associated with the first maximum number of transmission layers, and the second spatial parameter is the same as the third spatial parameter. In this case, the value of the second maximum number of transmission layers is the same as the value of the third maximum number of transmission layers.

In some embodiments, the at least one maximum number of transmission layers includes the first maximum number of transmission layers and the second maximum number of transmission layers.

In some embodiments, a value of the third maximum number of transmission layers is one of a third default value, a sum of the first maximum number of transmission layers and the second maximum number of transmission layers, the same as the first maximum number of transmission layers, and the same as the second maximum number of transmission layers.

In some embodiments, the at least one maximum number of transmission layers comprises the third maximum number of transmission layers.

In some embodiments, a value of the first maximum number of transmission layers is a fourth default value or the same value as the third maximum number of transmission layers.

The value of the second maximum number of transmission layers is a fifth default value or the same value as the third maximum number of transmission layers.

In some embodiments, the first PUSCH transmission scheme is associated with the first spatial parameter and the second spatial parameter, and the second PUSCH transmission scheme is associated with the third spatial parameter, and if the third spatial parameter is the same as the first spatial parameter or the second spatial parameter, the value of the third maximum number of transmission layers is the same as the value of the first maximum number of transmission layers or the second maximum number of transmission layers.

In some embodiments, at least one of the first maximum number of transmission layers, the second maximum number of transmission layers and the third maximum number of transmission layers is a multiple of 2.

In some embodiments, the second communication unit 1201 is further configured to transmit a first parameter to the terminal device, and the first parameter includes the at least one maximum number of transmission layers.

In some embodiments, if the at least one maximum number of transmission layers includes the first maximum number of transmission layers and/or the second maximum number of transmission layers, the first parameter includes at least one of a SRS resource set configuration parameter, a PUSCH configuration parameter, and a PUSCH serving cell configuration parameter.

In some embodiments, the at least one maximum number of transmission layers includes the first maximum number of transmission layers and/or the second maximum number of transmission layers, and the third maximum number of transmission layers is a sum of the first maximum number of transmission layers and the second maximum number of transmission layers, and the first parameter includes at least one of a PUSCH configuration parameter and a PUSCH serving cell configuration parameter.

In some embodiments, if the at least one maximum number of transmission layers includes the third maximum number of transmission layers, the first parameter includes at least one of a PUSCH configuration parameter and a PUSCH serving cell configuration parameter.

In some embodiments, the first maximum number of transmission layers is used to determine first information, the first information is transmission information associated with a first transmission parameter, and the first transmission parameter is a transmission parameter indicating transmission of the first PUSCH in the first PUSCH transmission scheme.

The second maximum number of transmission layers is used to determine second information, the second information is transmission information associated with a second transmission parameter, and the second transmission parameter is a transmission parameter indicating transmission of the second PUSCH in the first PUSCH transmission scheme, and the first PUSCH and the second PUSCH overlap in a time domain.

The third maximum number of transmission layers is used to determine third information, the third information is transmission information associated with a third transmission parameter, and the third transmission parameter is a transmission parameter indicating transmission of the third PUSCH in the second PUSCH transmission scheme.

In some embodiments, the transmission information includes at least one of the number of bits in an information field which carries the transmission parameter and a set of ranges to which the transmission parameter belongs.

In some embodiments, the transmission parameter includes at least one of a TPMI, an SRI, indicators associated with a phase-tracking reference signals (PTRS) and a demodulation reference signal (DMRS).

In some embodiments, if the PUSCH transmission is the codebook-based transmission, the transmission parameter includes at least one of the TPMI, and the indicators associated with the PTRS and the DMRS.

In some embodiments, the TPMI indicates pre-coding information and the number of transmission layers of the PUSCH, and the number of transmission layers indicated by the TPMI is less than or equal to the maximum number of transmission layers.

In some embodiments, if the PUSCH transmission is the non-codebook transmission, the transmission parameter includes at least one of the SRI, the indicators associated with the PTRS and the DMRS.

In some embodiments, the SRI indicates pre-coding information and the number of transmission layers of the PUSCH, and the number of transmission layers indicated by the SRI is less than or equal to the maximum number of transmission layers.

In some embodiments, the second communication unit 1101 is further configured to transmit a first signaling to the terminal device, and the first signaling indicates a type of the PUSCH transmission scheme.

In some embodiments, the first signaling includes at least one of downlink control information (DCI), a radio resource control (RRC) signaling and a media access control (MAC) signaling.

In some embodiments, if the first signaling is the DCI, the SRS resource set indication field carried in the DCI indicates a type of the PUSCH transmission scheme.

In some embodiments, if the SRS resource set indication field has a first value, and the first value indicates two SRS resource sets, the PUSCH transmission scheme is a first PUSCH transmission scheme, and/or, if the value of the SRS resource set indication field is a second value, and the second value indicates one SRS resource set, the PUSCH transmission scheme is a second PUSCH transmission scheme.

In some embodiments, if the second value indicates a first SRS resource set associated with the first maximum number of transmission layers, the third maximum number of transmission layers has the same value as the first maximum number of transmission layers, and/or, if the second value indicates a second SRS resource set associated with the second maximum number of transmission layers, the third maximum number of transmission layers has the same value as a value of the second maximum number of transmission layers.

In some embodiments, the spatial parameter includes at least one of a TCI state, antenna panel information, CORESET group information, SRS resource set information, and beam information.

Those skilled in the art should understand that the related descriptions of the terminal device 1000 and the network device 1100 according to the embodiments of the present disclosure can be understood with reference to the related descriptions of the wireless communication method according to the embodiments of the present disclosure.

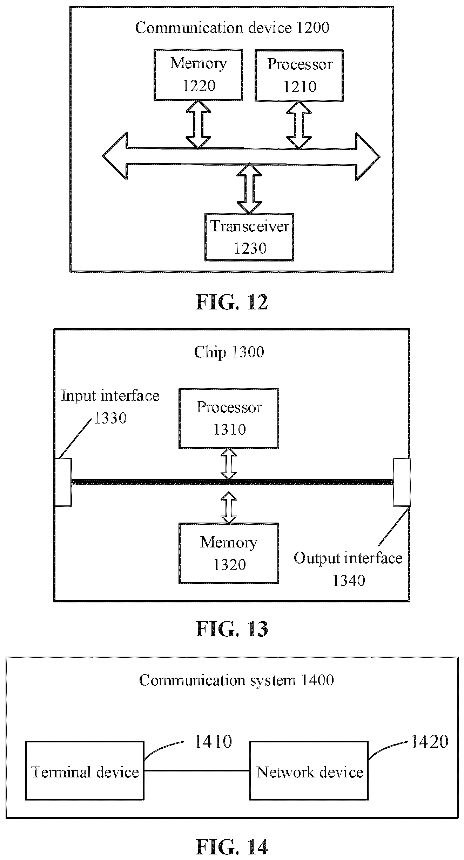

FIG. 12 is a schematic structural diagram of a communication device 1200 according to an embodiment of the present disclosure. The communication device may be a terminal device or a network device. The communication device 1200 shown in FIG. 12 includes a processor 1210, and the processor 1210 may invoke and execute a computer program from a memory to implement the method in the embodiment of the present disclosure.

Optionally, as shown in FIG. 12, the communication device 1200 may further include a memory 1220. The processor 1210 may call and run a computer program from the memory 1220 to implement the method in the embodiment of the present disclosure.

The memory 1220 may be a separate device independent of the processor 1210 or may be integrated in the processor 1210.

Optionally, as shown in FIG. 12, the communication device 1200 may further include a transceiver 1230, and the processor 1210 may control the transceiver 1230 to communicate with other devices. Specifically, the processor may control the transceiver to transmit information or data to the other devices to or receive information or data transmitted by other devices.

The transceiver 1230 may include a transmitter and a receiver. The transceiver 1230 may further include antennas, and the number of antennas may be one or more.

Optionally, the communication device 1200 may be a terminal device according to the embodiment of the present disclosure, and the communication device 1200 may implement flows implemented by the terminal device in each method according to the embodiment of the present disclosure, and the flows are not repeated here for the sake of brevity. The first communication unit in the terminal device may be implemented by the transceiver 1230.

Optionally, the communication device 1200 may be a network device according to the embodiment of the present disclosure, and the communication device 1200 may implement the flows implemented by the network device in each method according to the embodiment of the present disclosure, and will not be described herein for the sake of conciseness. The second communication unit in the network device may be implemented by the transceiver 1230.

FIG. 13 is a schematic structural diagram of a chip according to an embodiment of the present disclosure. The chip 1300 shown in FIG. 13 includes a processor 1310, which can invoke and execute a computer program from a memory to implement the method in the embodiment of the present disclosure.

Optionally, as shown in FIG. 13, the chip 1300 may further include a memory 1320. The processor 1310 may invoke and execute a computer program from the memory 1320 to implement the method in the embodiment of the present disclosure.

The memory 1320 may be a separate device independent of the processor 1310 or may be integrated in the processor 1310.

Optionally, the chip 1300 may further include an input interface 1330. The processor 1310 may control the input interface 1330 to communicate with other devices or chips. Specifically, the processor may control the input interface to acquire information or data transmitted by other devices or chips.

Optionally, the chip 1300 may further include an output interface 1340. The processor 1310 may control the output interface 1340 to communicate with other devices or chips. Specifically, the processor may control the output interface to output information or data to other devices or chips.

Optionally, the chip can be applied to the network device in the embodiment of the present disclosure, and the chip can implement the flows implemented by the network device in each method of the embodiment of the present disclosure, and the flows are not repeated here for the sake of brevity.

Optionally, the chip can be applied to the mobile terminal/terminal device in the embodiment of the present disclosure, and the chip can implement the flows implemented by the mobile terminal/terminal device in each method of the embodiment of the present disclosure, and the flows are not repeated here for the sake of brevity.

It should be understood that the chips mentioned in the embodiments of the present disclosure may also be referred to as a system-level chip, a system chip, a chip system, a system-on-chip chip, or the like.

FIG. 14 is a schematic block diagram of a communication system 1400 according to an embodiment of the present disclosure. As shown in FIG. 14, the communication system 1400 includes a terminal device 1410 and a network device 1420. In an example, the network device 1502 includes an access network device and/or a core network device.

The terminal device 1410 may be used to implement the functions implemented by the terminal device in the above-described method, and the network device 1420 may be used to implement the functions implemented by the network device in the above-described method, and the description of the functions are not repeated here for the sake of brevity.

It should be understood that the processor of the embodiment of the present disclosure may be an integrated circuit chip having signal processing capabilities. In the implementation process, the steps of the above-described method embodiments may be completed by integrated logic circuits of hardware in the processor or instructions in the form of software. The processor described above may be a general-purpose processor, a digital signal processor (DSP), an application specific integrated circuit (ASIC), a field programmable gate array (FPGA) or other programmable logic device, a discrete gate or transistor logic device, or a discrete hardware component, to implement or execute the methods, steps, and logical block diagrams disclosed in the embodiments of the present disclosure. The general purpose processor may be a microprocessor or the processor may be any conventional processor or the like. The steps of the method disclosed in connection with the embodiments of the present disclosure may be directly be executed by the hardware decoding processor, or may be executed by combining hardware and software modules in the decoding processor. The software module may be provided in a storage medium mature in the art, such as a random access memory, a flash memory, a read-only memory, a programmable read-only memory, or an electrically erasable programmable memory, a register, etc. The storage medium is arranged in the memory, and the processor reads the information in the memory, and completes the steps of the above method in combination with the hardware thereof.

It is understood that the memory in the embodiments of the present disclosure may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which serves as an external cache. By way of illustration, but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink SDRAM (SLDRAM) and a direct rambus RAM (DR RAM). It should be noted that the memory of the systems and methods described herein is intended to include, but is not limited to, these and any other suitable type of memory.

It should be understood that the above memory is illustrative but is not limited thereto. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchlink SDRAM (SLDRAM) and a direct rambus RAM (DR RAM), and the like. That is, the memory in the embodiments of the present disclosure is intended to include, but is not limited to, these and any other suitable type of memory.

The embodiments of the present disclosure further provide a computer-readable storage medium for storing a computer program.

Optionally, the computer-readable storage medium may be applied to the mobile terminal/terminal device in the embodiment of the present disclosure, and the computer program causes the computer to execute the flows implemented by the mobile terminal/terminal device in each method of the embodiment of the present disclosure, and the flows are not repeatedly described herein for the sake of brevity.

Optionally, the computer-readable storage medium may be applied to the network device in the embodiment of the present disclosure, and the operation of the computer program causes the computer to execute the flows implemented by the network device in each method in the embodiment of the present disclosure, and the description of the flows are not repeated here for the sake of brevity.

The embodiments of the present disclosure further provide a computer program product including computer program instructions.

Optionally, the computer program product may be applied to the mobile terminal/terminal device in the embodiment of the present disclosure, and the operation of the computer program instruction causes the computer to execute the flows implemented by the mobile terminal/terminal device in each method of the embodiment of the present disclosure, and the description of the flows is not repeated here for the sake of brevity.

Optionally, the computer program product may be applied to the network device in the embodiment of the present disclosure, and the operation of the computer program instruction causes the computer to execute the flows implemented by the network device in each method in the embodiment of the present disclosure, and the description of the flows are not repeated here for the sake of brevity.

The embodiments of the present disclosure also provide a computer program.

Optionally, the computer program may be applied to the network device in the embodiment of the present disclosure, and the computer program, when run on the computer, enables the computer to execute the flows implemented by the network device in each method of the embodiment of the present disclosure, and the description of the flows is not repeated here for the sake of brevity.

Optionally, the computer program may be applied to the mobile terminal/terminal device in the embodiment of the present disclosure, and the computer program, when run on the computer, enables the computer to execute the flows implemented by the mobile terminal/terminal device in each method of the embodiment of the present disclosure, and the flows are not repeated here for the sake of brevity.

Those of ordinary skill in the art will appreciate that the elements and algorithmic steps of the various examples described in connection with the embodiments disclosed herein may be implemented in electronic hardware, or a combination of computer software and electronic hardware. Whether these functions are executed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that, for convenience and brevity of the description, regarding the specific operation processes of the systems, devices, and units described above, reference may be made to the corresponding processes in the aforementioned method embodiments, and the specific operation processes of the systems, devices, and units described above are not repeated here.

In several embodiments provided herein, it should be understood that the disclosed systems, device, and methods may be implemented in other ways. For example, the device embodiments described above are merely schematic, for example, the division of units is only one logical function division, and there may be other division manners in actual implementation. For example, multiple units or components may be combined or integrated into another system, or some features may be ignored or not implemented. In addition, the coupling or direct coupling or communication connection shown or discussed may be an indirect coupling or communication connection through some interface, device or unit, which may be electrical, mechanical or otherwise.

The units described as separate units may or may not be physically separated, and the units displayed as units may or may not be physical units, that is, the units may be located at the same place or may be distributed over a plurality of network units. Some or all of the units may be selected according to actual needs to achieve the purpose of the solution of the present embodiment.

In addition, all functional units in each embodiment of the present disclosure may be integrated in one processing unit, or each function unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or a part of the technical solution that contributes to the prior art or a part of the technical solution may be embodied in the form of a software product, the computer software product is stored in a storage medium, includes several instructions for causing a computer device (which may be a personal computer, server, or network device, etc.) to perform all or a part of the steps of the method described in various embodiments of the present disclosure. The storage medium includes a USB disk, a removable hard disk, a read-only memory (ROM), a random access memory (RAM), a magnetic disk, or an optical disk or a medium capable of storing program codes.

[**00432]** The foregoing is merely a specific embodiment of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be subject to the scope of protection of the claims.

## Claims

1. A wireless communication method, comprising:
receiving, by a terminal device, at least one maximum number of transmission layers transmitted by a network device, wherein the at least one maximum number of transmission layers is configured to determine a first maximum number of transmission layers, and a second maximum number of transmission layers, and/or the at least one maximum number of transmission layers is configured to determine a third maximum number of transmission layers, the first maximum number of transmission layers and the second maximum number of transmission layers are used for a first physical uplink shared channel (PUSCH) transmission scheme associated with two different spatial parameters, and the third maximum number of transmission layers is used for a second PUSCH transmission scheme associated with one spatial parameter.

2. The method of claim 1, wherein the first PUSCH transmission scheme is configured for transmission of a first PUSCH and a second PUSCH, the first PUSCH and the second PUSCH overlap in a time domain, and the second PUSCH transmission scheme is configured for transmission of a third PUSCH.

3. The method of claim 1 or 2, wherein the at least one maximum number of transmission layers comprises the first maximum number of transmission layers, the second maximum number of transmission layers and the third maximum number of transmission layers.

4. The method of claim 3, wherein the first maximum number of transmission layers, the second maximum number of transmission layers and the third maximum number of transmission layers meet at least one of following conditions:
a sum of the first maximum number of transmission layers and the second maximum number of transmission layers is the same as the third maximum number of transmission layers;
the sum of the first maximum number of transmission layers and the second maximum number of transmission layers is independent of the third maximum number of transmission layers; and
every two of the first maximum number of transmission layers, the second maximum number of transmission layers and the third maximum number of transmission layers are different.

5. The method of claim 3 or 4, wherein
the first maximum number of transmission layers is associated with a first spatial parameter of the two different spatial parameters;
the second maximum number of transmission layers is associated with a second spatial parameter of the two different spatial parameters; and
the third maximum number of transmission layers is associated with a third spatial parameter associated with the second PUSCH transmission scheme.

6. The method of claim 1 or 2, wherein the at least one maximum number of transmission layers comprises the first maximum number of transmission layers and the third maximum number of transmission layers.

7. The method of claim 6, wherein a value of the second maximum number of transmission layers is one of:
a first default value;
a difference between the first maximum number of transmission layers and the third maximum number of transmission layers;
a same value as the third maximum number of transmission layers;
a same value as the first maximum number of transmission layers; and
a value obtained by subtracting the first maximum number of transmission layers from a second default value.

8. The method according to claim 6 or 7, wherein if the first PUSCH transmission scheme is associated with a first spatial parameter and a second spatial parameter, and the second PUSCH transmission scheme is associated with a third spatial parameter, and the first spatial parameter is associated with the first maximum number of transmission layers, and the second spatial parameter is the same as the third spatial parameter, a value of the second maximum number of transmission layers is the same as a value of the third maximum number of transmission layers.

9. The method of claim 1 or 2, wherein the at least one maximum number of transmission layers comprises the first maximum number of transmission layers and the second maximum number of transmission layers.

10. The method of claim 9, wherein a value of the third maximum number of transmission layers is one of:
a third default value;
a sum of the first maximum number of transmission layers and the second maximum number of transmission layers;
a same value as the first maximum number of transmission layers; and
a same value as the second maximum number of transmission layers.

11. The method of claim 1 or 2, wherein the at least one maximum number of transmission layers comprises the third maximum number of transmission layers.

12. The method of claim 11, wherein
a value of the first maximum number of transmission layers is a fourth default value or a same value as the third maximum number of transmission layers; and
a value of the second maximum number of transmission layers is a fifth default value or a same value as the third maximum number of transmission layers.

13. The method of any one of claims 9 to 12, wherein
the first PUSCH transmission scheme is associated with a first spatial parameter and a second spatial parameter, and the second PUSCH transmission scheme is associated with a third spatial parameter, and if the third spatial parameter is the same as the first spatial parameter or the second spatial parameter, a value of the third maximum number of transmission layers is the same as the value of the first maximum number of transmission layers or the second maximum number of transmission layers.

14. The method of any one of claims 1 to 13, wherein at least one of the first maximum number of transmission layers, the second maximum number of transmission layers or the third maximum number of transmission layers is a multiple of 2.

15. The method of any one of claims 1 to 14, wherein the receiving, by a terminal device, at least one maximum number of transmission layers transmitted by a network device comprises:
receiving, by the terminal device, a first parameter transmitted by the network device, the first parameter comprising the at least one maximum number of transmission layers.

16. The method of claim 15, wherein if the at least one maximum number of transmission layers comprises the first maximum number of transmission layers and/or the second maximum number of transmission layers, the first parameter comprises at least one of:
a sounding reference signal (SRS) resource set configuration parameter;
a PUSCH configuration parameter; and
a PUSCH serving cell configuration parameter.

17. The method of claim 15 or 16, wherein if the at least one maximum number of transmission layers comprises the first maximum number of transmission layers and/or the second maximum number of transmission layers, and the third maximum number of transmission layers is a sum of the first maximum number of transmission layers and the second maximum number of transmission layers, the first parameter comprises at least one of:
a PUSCH configuration parameter; and
a PUSCH serving cell configuration parameter.

18. The method of claim 15, wherein if the at least one maximum number of transmission layers comprises the third maximum number of transmission layers, the first parameter comprises at least one of:
a PUSCH configuration parameter; and
a PUSCH serving cell configuration parameter.

19. The method of any one of claims 1 to 18, wherein
the first maximum number of transmission layers is used to determine first information, the first information being transmission information associated with a first transmission parameter, the first transmission parameter being a transmission parameter indicating transmission of a first PUSCH in the first PUSCH transmission scheme;
the second maximum number of transmission layers is used to determine second information, the second information being transmission information associated with a second transmission parameter, the second transmission parameter being a transmission parameter indicating transmission of a second PUSCH in the first PUSCH transmission scheme, and the first PUSCH and the second PUSCH overlap in a time domain; and
the third maximum number of transmission layers is used to determine third information, the third information being transmission information associated with a third transmission parameter, the third transmission parameter being a transmission parameter indicating transmission of a third PUSCH in the second PUSCH transmission scheme.

20. The method of claim 19, wherein the transmission information comprises at least one of:
a number of bits in an information field for carrying the transmission parameter; or
a set of ranges to which the transmission parameter belongs.

21. The method of claim 19 or 20, wherein the transmission parameter comprises at least one of:
a wideband transmitted pre-coding matrix indicator (TPMI), a SRS resource indicator (SRI) or indicators associated with a phase-tracking reference signal (PTRS) and a demodulation reference signal (DMRS).

22. The method of claim 21, wherein if a transmission of a PUSCH is a codebook-based transmission, the transmission parameter comprises at least one of the TPMI, or the indicators associated with the PTRS and the DMRS.

23. The method of claim 22, wherein the TPMI indicates pre-coding information and a number of transmission layers of the PUSCH, and the number of transmission layers indicated by the TPMI is less than or equal to the maximum number of transmission layers.

24. The method of claim 21, wherein if a transmission of the PUSCH is a non-codebook transmission, the transmission parameter comprises at least one of the SRI, or the indicators associated with the PTRS and the DMRS.

25. The method of claim 24, wherein the SRI indicates pre-coding information and a number of transmission layers of the PUSCH, and the number of transmission layers indicated by the SRI is less than or equal to the maximum number of transmission layers.

26. The method of any one of claims 1 to 25, further comprising:
determining, by the terminal device if the PUSCH transmission scheme is the first PUSCH transmission scheme, the first information according to the first maximum number of transmission layers and the second information according to the second maximum number of transmission layers.

27. The method of any one of claims 19 to 25, further comprising:
determining, by the terminal device if the PUSCH transmission scheme is the second PUSCH transmission scheme, the third information according to the third maximum number of transmission layers.

28. The method of claim 26 or 27, further comprising:
receiving, by the terminal device, a first signaling transmitted by the network device, the first signaling indicating a type of the PUSCH transmission scheme.

29. The method of claim 28, wherein the first signaling comprises at least one of:
downlink control information (DCI);
radio resource control (RRC) signaling; and
media access control (MAC) signaling.

30. The method of claim 29, wherein if the first signaling is **DCI,** an SRS resource set indication field carried in the DCI indicates the type of the PUSCH transmission scheme.

31. The method of claim 30, wherein
if the value of the SRS resource set indication field is a first value, the first value indicates two SRS resource sets, and the PUSCH transmission scheme is the first PUSCH transmission scheme; and/or,
if the value of the SRS resource set indication field is a second value, the second value indicates one SRS resource set, and the PUSCH transmission scheme is the second PUSCH transmission scheme.

32. The method of claim 31, wherein if the second value indicates a first SRS resource set associated with the first maximum number of transmission layers, the value of the third maximum number of transmission layers is the same as the value of the first maximum number of transmission layers; and/or,
if the second value indicates a second SRS resource set associated with the second maximum number of transmission layers, a value of the third maximum number of transmission layers is the same as a value of the second maximum number of transmission layers.

33. The method of any one of claims 1 to 32, wherein the spatial parameter comprises at least one of:
a transmission configuration indicator (TCI) state;
antenna panel information;
control resource set (CORESET) group information;
SRS resource set information; and
beam information.

34. The method of any one of claims 1 to 33, wherein in case where the first PUSCH and the second PUSCH transmitted by the first PUSCH transmission scheme are scheduled by first DCI and second DCI, respectively, and the first PUSCH and the second PUSCH overlap in the time domain, the method further comprises:
transmitting, by the terminal device, at least one of the first PUSCH or the second PUSCH according to a power control priority order if power of the first PUSCH and power of the second PUSCH exceed a maximum power, wherein the power control priority order comprises a power allocation priority order of the first PUSCH and the second PUSCH.

35. The method of claim 34, wherein the power control priority order is determined according to at least one of:
a relationship between a first time interval and a first duration, wherein the first time interval is a time interval between a reception time of third DCI and a transmission time of the third PUSCH, the third DCI is a DCI received later among the first DCI and the second DCI, and the third PUSCH is a PUSCH transmitted first among the first PUSCH and the second PUSCH; and
a priority of the first PUSCH and the second PUSCH.

36. The method of claim 35, wherein
if the first time interval is greater than or equal to the first duration, the power control priority order is that a priority of the first PUSCH is greater than a priority of the second PUSCH, or the priority of the second PUSCH is greater than the priority of the first PUSCH; or,
if the first time interval is less than the first duration, the priority of the power control is that a priority of a fourth PUSCH is greater than a priority of the third PUSCH, and the fourth PUSCH is a PUSCH other than the third PUSCH among the first PUSCH and the second PUSCH.

37. The method of claim 36, wherein if the first time interval is greater than or equal to the first duration and a priority of the first PUSCH is greater than a priority of the second PUSCH, the power control priority order is that the priority of the first PUSCH is greater than the priority of the second PUSCH; or,
if the first time interval is greater than or equal to the first duration, and the priority of the second PUSCH is greater than the priority of the first PUSCH, the power control priority order is that the priority of the second PUSCH is greater than the priority of the first PUSCH.

38. The method of any one of claims 35 to 37, wherein the terminal device transmits at least one of the first PUSCH or the second PUSCH according to the power control priority order in following condition:
a power of a first panel and a second panel of the terminal device is able to be regulated dynamically, the first panel being used for transmitting the first PUSCH and the second panel being for transmitting the second PUSCH.

39. A wireless communication method, comprising:
transmitting, by the network device, at least one maximum number of transmission layers to a terminal device, wherein the at least one maximum number of transmission layers is configured to determine a first maximum number of transmission layers, a second maximum number of transmission layers, and/or the at least one maximum number of transmission layers is configured to determine a third maximum number of transmission layers, the first maximum number of transmission layers and the second maximum number of transmission layers are used for a first physical uplink shared channel (PUSCH) transmission scheme associated with two different spatial parameters, and the third maximum number of transmission layers is used for a second PUSCH transmission scheme associated with one spatial parameter.

40. The method of claim 39, wherein the first PUSCH transmission scheme is configured for transmission of a first PUSCH and a second PUSCH, the first PUSCH and the second PUSCH overlap in a time domain, and the second PUSCH transmission scheme is configured for transmission of a third PUSCH.

41. The method of claim 39 or 40, wherein the at least one maximum number of transmission layers comprises the first maximum number of transmission layers, the second maximum number of transmission layers and the third maximum number of transmission layers.

42. The method of claim 41, wherein the first maximum number of transmission layers, the second maximum number of transmission layers and the third maximum number of transmission layers meet at least one of following conditions:
a sum of the first maximum number of transmission layers and the second maximum number of transmission layers is the same as the third maximum number of transmission layers;
the sum of the first maximum number of transmission layers and the second maximum number of transmission layers is independent of the third maximum number of transmission layers; and
every two of the first maximum number of transmission layers, the second maximum number of transmission layers and the third maximum number of transmission layers are different.

43. The method of claim 41 or 42, wherein
the first maximum number of transmission layers is associated with a first spatial parameter of the two different spatial parameters;
the second maximum number of transmission layers is associated with a second spatial parameter of the two different spatial parameters; and
the third maximum number of transmission layers is associated with a third spatial parameter associated with the second PUSCH transmission scheme.

44. The method of claim 39 or 40, wherein the at least one maximum number of transmission layers comprises the first maximum number of transmission layers and the third maximum number of transmission layers.

45. The method of claim 44, wherein a value of the second maximum number of transmission layers is one of:
a first default value;
a difference between the first maximum number of transmission layers and the third maximum number of transmission layers;
a same value as the third maximum number of transmission layers;
a same value as the first maximum number of transmission layers; and
a value obtained by subtracting the first maximum number of transmission layers from a second default value.

46. The method according to claim 44 or 45, wherein if the first PUSCH transmission scheme is associated with a first spatial parameter and a second spatial parameter, and the second PUSCH transmission scheme is associated with a third spatial parameter, and the first spatial parameter is associated with the first maximum number of transmission layers, and the second spatial parameter is the same as the third spatial parameter, a value of the second maximum number of transmission layers is the same as the value of the third maximum number of transmission layers.

47. The method of claim 39 or 40, wherein the at least one maximum number of transmission layers comprises the first maximum number of transmission layers and the second maximum number of transmission layers.

48. The method of claim 47, wherein a value of the third maximum number of transmission layers is one of:
a third default value;
a sum of the first maximum number of transmission layers and the second maximum number of transmission layers;
a same as the first maximum number of transmission layers; and
a same as the second maximum number of transmission layers.

49. The method of claim 39 or 40, wherein the at least one maximum number of transmission layers comprises the third maximum number of transmission layers.

50. The method of claim 49, wherein
a value of the first maximum number of transmission layers is a fourth default value or a same value as the third maximum number of transmission layers; and
a value of the second maximum number of transmission layers is a fifth default value or the same value as the third maximum number of transmission layers.

51. The method of any one of claims 47 to 50, wherein
the first PUSCH transmission scheme is associated with a first spatial parameter and a second spatial parameter, and the second PUSCH transmission scheme is associated with a third spatial parameter, and if the third spatial parameter is the same as the first spatial parameter or the second spatial parameter, a value of the third maximum number of transmission layers is the same as the value of the first maximum number of transmission layers or the second maximum number of transmission layers.

52. The method of any one of claims 39 to 51, wherein at least one of the first maximum number of transmission layers, the second maximum number of transmission layers or the third maximum number of transmission layers is a multiple of 2.

53. The method of any of claims 39 to 52, wherein the transmitting, by the network device, at least one maximum number of transmission layers to the terminal device comprises:
transmitting, by the network device, a first parameter to the terminal device, and the first parameter comprising the at least one maximum number of transmission layers.

54. The method of claim 53, wherein if the at least one maximum number of transmission layers comprises the first maximum number of transmission layers and/or the second maximum number of transmission layers, the first parameter comprises at least one of:
a sounding reference signal (SRS) resource set configuration parameter;
a PUSCH configuration parameter; and
a PUSCH serving cell configuration parameter.

55. The method of claim 53 or 54, wherein if the at least one maximum number of transmission layers comprises the first maximum number of transmission layers and/or the second maximum number of transmission layers, and the third maximum number of transmission layers is a sum of the first maximum number of transmission layers and the second maximum number of transmission layers, the first parameter comprises at least one of:
a PUSCH configuration parameter; and
a PUSCH serving cell configuration parameter.

56. The method of claim 53, wherein if the at least one maximum number of transmission layers comprises the third maximum number of transmission layers, the first parameter comprises at least one of:
a PUSCH configuration parameter; and
a PUSCH serving cell configuration parameter.

57. The method of any one of claims 39 to 56, wherein
the first maximum number of transmission layers is used to determine first information, the first information being transmission information associated with a first transmission parameter, the first transmission parameter being a transmission parameter indicating transmission of a first PUSCH in the first PUSCH transmission scheme;
the second maximum number of transmission layers is used to determine second information, the second information being transmission information associated with a second transmission parameter, the second transmission parameter being a transmission parameter indicating transmission of a second PUSCH in the first PUSCH transmission scheme, and the first PUSCH and the second PUSCH overlap in a time domain; and
the third maximum number of transmission layers is used to determine third information, the third information being transmission information associated with a third transmission parameter, the third transmission parameter being a transmission parameter indicating transmission of a third PUSCH in the second PUSCH transmission scheme.

58. The method of claim 57, wherein the transmission information comprises at least one of:
a number of bits in an information field for carrying the transmission parameter; or
a set of ranges to which the transmission parameter belongs.

59. The method of claim 57 or 58, wherein the transmission parameter comprises at least one of:
a wideband transmitted pre-coding matrix indicator (TPMI), a SRS resource indicator (SRI) or indicators associated with a phase-tracking reference signal (PTRS) and a demodulation reference signal (DMRS).

60. The method of claim 59, wherein if a transmission of a PUSCH is a codebook-based transmission, the transmission parameter comprises at least one of the TPMI, or the indicators associated with the PTRS and the DMRS.

61. The method of claim 60, wherein the TPMI indicates pre-coding information and a number of transmission layers of the PUSCH, and the number of transmission layers indicated by the TPMI is less than or equal to the maximum number of transmission layers.

62. The method of claim 59, wherein if a transmission of the PUSCH is a non-codebook transmission, the transmission parameter comprises at least one of the SRI, or the indicators associated with the PTRS and the DMRS.

63. The method of claim 62, wherein the SRI indicates pre-coding information and a number of transmission layers of the PUSCH, and the number of transmission layers indicated by the SRI is less than or equal to the maximum number of transmission layers.

64. The method of any one of claims 39 to 63, wherein the method further comprises:
transmitting, by the network device, first signaling to the terminal device, the first signaling indicating a type of the PUSCH transmission scheme.

65. The method of claim 64, wherein the first signaling comprises at least one of:
downlink control information (DCI);
radio resource control (RRC) signaling; and
media access control (MAC) signaling.

66. The method of claim 65, wherein if the first signaling is DCI, an SRS resource set indication field carried in the DCI indicates the type of the PUSCH transmission scheme.

67. The method of claim 66, wherein
if the value of the SRS resource set indication field is a first value, the first value indicates two SRS resource sets, and the PUSCH transmission scheme is the first PUSCH transmission scheme; and/or,
if the value of the SRS resource set indication field is a second value, the second value indicates one SRS resource set, and the PUSCH transmission scheme is the second PUSCH transmission scheme.

68. The method of claim 67, wherein
if the second value indicates a first SRS resource set associated with the first maximum number of transmission layers, the value of the third maximum number of transmission layers is the same as the value of the first maximum number of transmission layers; and/or,
if the second value indicates a second SRS resource set associated with the second maximum number of transmission layers, a value of the third maximum number of transmission layers is the same as a value of the second maximum number of transmission layers.

69. The method of any one of claims 39 to 68, wherein the spatial parameter comprises at least one of:
a transmission configuration indicator (TCI) state;
antenna panel information;
control resource set (CORESET) group information;
sounding reference signal (SRS) resource set information; and
beam information.

70. A terminal device, comprising:
a first communication unit configured to receive at least one maximum number of transmission layers transmitted by a network device, wherein the at least one maximum number of transmission layers is configured to determine a first maximum number of transmission layers, a second maximum number of transmission layers, and/or the at least one maximum number of transmission layers is configured to determine a third maximum number of transmission layers, the first maximum number of transmission layers and the second maximum number of transmission layers are used for a first physical uplink shared channel (PUSCH) transmission scheme associated with two different spatial parameters, and the third maximum number of transmission layers is used for a second PUSCH transmission scheme associated with one spatial parameter.

71. A network device, comprising:
a second communication unit configured to transmit at least one maximum number of transmission layers to a terminal device, wherein the at least one maximum number of transmission layers is configured to determine a first maximum number of transmission layers, a second maximum number of transmission layers, and/or the at least one maximum number of transmission layers is configured to determine a third maximum number of transmission layers, the first maximum number of transmission layers and the second maximum number of transmission layers are used for a first physical uplink shared channel (PUSCH) transmission scheme associated with two different spatial parameters, and the third maximum number of transmission layers is used for a second PUSCH transmission scheme associated with one spatial parameter.

72. A terminal device comprising a processor and a memory for storing a computer program, wherein the processor is configured for invoking and executing the computer program stored in the memory to perform the method of any one of claims 1 to 38.

73. A network device comprising a processor and a memory for storing a computer program, wherein the processor is configured for invoking and executing the computer program stored in the memory to perform the method of any one of claims 39 to 69.

74. A chip comprising a processor for invoking and executing a computer program from a memory to enable a device on which the chip is mounted to perform the method of any one of claims 1 to 38, or the method of any one of claims 39 to 69.

75. A computer-readable storage medium for storing a computer program which, when being executed, causes a computer to perform the method of any one of claims 1 to 38, or the method of any one of claims 39 to 69.

76. A computer program product comprising a computer program instruction which, when being executed, causes a computer to perform the method of any one of claims 1 to 38, or the method of any one of claims 39 to 69.

77. A computer program which, when being executed, causes a computer to perform the method of any one of claims 1 to 38, or the method of any one of claims 39 to 69.
